(19) Europäisches Patentamt
European Patent Office
Office européen des brevets

(11) **EP 3 467 775 A1**

(12) **EUROPEAN PATENT APPLICATION**

(43) Date of publication:
**10.04.2019 Bulletin 2019/15**

(51) Int Cl.:
***G06T 7/80*** (2017.01)

(21) Application number: **18196810.8**

(22) Date of filing: **26.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.10.2017 JP 2017193861**
**10.05.2018 JP 2018091446**

(71) Applicant: **FUJITSU LIMITED**
**Kanagawa 211-8588 (JP)**

(72) Inventors:
• **KANEKO, Soutaro**
**Kawasaki-shi, Kanagawa 211-8588 (JP)**
• **NAKAYAMA, Osafumi**
**Kawasaki-shi, Kanagawa 211-8588 (JP)**

(74) Representative: **Haseltine Lake LLP**
**Lincoln House, 5th Floor**
**300 High Holborn**
**London WC1V 7JH (GB)**

(54) **ESTIMATING PROGRAM, ESTIMATING METHOD, AND ESTIMATING SYSTEM FOR CAMERA PARAMETER**

(57)    A camera parameter estimating method includes: obtaining a plurality of image frames in time series, the image frames being photographed by a camera installed in a mobile body; detecting at least one straight line from a central portion of a first image frame group including one or more first image frames among the plurality of image frames; detecting a plurality of curves corresponding to the straight line from a second image frame group including one or more second image frames at a later time than the image frame from which the straight line is detected based on a feature quantity of the detected straight line; and estimating a parameter of the camera based on the plurality of curves.

FIG.27

**Description**

FIELD

The embodiments discussed herein are related to a camera parameter estimating program and the like.

BACKGROUND

Investigation into the cause of an automobile accident and the like is performed by using video photographed by a drive recorder installed in an automobile. In addition, there has recently been a system that performs safety assistance by analyzing video photographed by a drive recorder, detecting lane deviation, an obstacle, or the like, and warning a driver.

Here, in order to detect vehicle deviation or an obstacle with high accuracy, distance measurement is to be performed correctly by using an image. In addition, in order to perform the distance measurement correctly, camera calibration is performed. The camera calibration is to estimate an internal parameter and an external parameter of a camera. The internal parameter indicates characteristics of a sensor and a lens of the camera (lens distortion and the like). The external parameter indicates the position and attitude of the camera.

When the camera calibration is performed, a marker whose positional relation is known in a real space is photographed by the camera to be calibrated, and the internal parameter and external parameter of the camera are estimated from the positional relation of a marker shape appearing in the camera.

Incidentally, Japanese Laid-open Patent Publication No. 2011-185753 reduces cost of installation of the marker by minimizing the shape of the marker. In addition, Japanese Laid-open Patent Publication No. 2013-115540 estimates the external parameter of the camera by using an internal parameter of the camera and a local gradient histogram of an image, and thus reduces calibration cost by doing away with the marker.

PROBLEM

In the above-mentioned technique, the lens distortion cannot be estimated without using the markers.

SUMMARY

According to an embodiment of an aspect of the invention, a camera parameter estimating method includes: obtaining a plurality of image frames in time series, the image frames being photographed by a camera installed in a mobile body; detecting at least one straight line from a central portion of a first image frame group including one or more first image frames among the plurality of image frames; detecting a plurality of curves corresponding to the straight line from a second image frame group including one or more second image frames at a later time than an image frame from which the straight line is detected based on a feature quantity of the detected straight line; and estimating a parameter of the camera based on the plurality of curves.

According to an embodiment of an aspect of the invention, the lens distortion may be estimated without using any marker.

BRIEF DESCRIPTION OF DRAWINGS

FIG. 1 is a diagram illustrating an example of an estimating system according to a present first embodiment;
FIG. 2 is a diagram of assistance in explaining a first point of attention of the present technology;
FIG. 3 is a diagram of assistance in explaining a second point of attention of the present technology;
FIG. 4 is a diagram of assistance in explaining processing of an estimating device based on first and second points of attention;
FIG. 5 is a diagram of assistance in explaining an example of estimation of an internal parameter;
FIG. 6 is a functional block diagram illustrating a configuration of an estimating device according to the present first embodiment;
FIG. 7 is a diagram illustrating an example of a data structure of a video DB;
FIG. 8 is a diagram illustrating an example of a data structure of a detected line DB;
FIG. 9 is a diagram (1) of assistance in explaining non-distorted region setting processing;
FIG. 10 is a diagram (2) of assistance in explaining non-distorted region setting processing;
FIG. 11 is a flowchart illustrating a processing procedure of non-distorted region setting processing;

FIG. 12 is a diagram of assistance in explaining straight line detection processing;

FIG. 13 is a diagram of assistance in explaining endpoint tracking processing;

FIG. 14 is a diagram illustrating an example of an image change at a near time;

FIG. 15 is a diagram of assistance in explaining inter-endpoint line element search processing;

FIG. 16 is a diagram of assistance in explaining problems in searching for line elements;

FIG. 17 is a diagram of assistance in explaining a method of solving problems in searching for line elements;

FIG. 18 is a flowchart illustrating a processing procedure of inter-endpoint line element search processing;

FIG. 19 is a flowchart illustrating a processing procedure of a line element search;

FIG. 20 is a diagram of assistance in explaining processing of a line element search;

FIG. 21 is a diagram of assistance in explaining an example of mask images;

FIG. 22 is a flowchart illustrating a processing procedure of line element determination;

FIG. 23 is a diagram of assistance in explaining line element determination processing;

FIG. 24 is a flowchart illustrating a processing procedure of processing of determining whether or not a change condition is satisfied;

FIG. 25 is a flowchart illustrating a processing procedure of processing of determining whether or not resetting is possible;

FIG. 26 is a diagram illustrating an example of performing line element extraction;

FIG. 27 is a diagram of assistance in explaining an example of detected lines;

FIG. 28 is a diagram of assistance in explaining processing of an estimating unit;

FIG. 29 is a diagram illustrating an example of distortion correction;

FIG. 30 is a flowchart illustrating an example of a processing procedure of an estimating device according to the present first embodiment;

FIG. 31 is a diagram of assistance in explaining a straight line detecting condition of an estimating device described in the present first embodiment;

FIG. 32 is a diagram illustrating an example of images of a straight line and a curve;

FIG. 33 is a diagram of assistance in explaining improvements over an estimating device described in the present first embodiment;

FIG. 34 is a diagram illustrating an example of an object that partially protrudes from a non-distorted region;

FIG. 35 is a diagram of assistance in explaining processing of an estimating device according to a present second embodiment;

FIG. 36 is a diagram of assistance in explaining a convex lens distortion property 1;

FIG. 37 is a diagram of assistance in explaining a convex lens distortion property 2;

FIG. 38 is a diagram of assistance in explaining processing of identifying a straight line guaranteeing range;

FIG. 39 is a functional block diagram illustrating a configuration of an estimating device according to the present second embodiment;

FIG. 40 is a diagram of assistance in explaining straight line detection processing according to the present second embodiment;

FIG. 41 is a flowchart illustrating an example of a processing procedure of an estimating device according to the present second embodiment;

FIG. 42 is a flowchart illustrating a processing procedure of vanishing point estimation;

FIG. 43 is a flowchart illustrating a processing procedure of registering a straight line guaranteeing range;

FIG. 44 is a diagram of assistance in explaining other processing of identifying a straight line guaranteeing range; and

FIG. 45 is a diagram illustrating an example of a hardware configuration of a computer that implements functions similar to estimating devices.

DESCRIPTION OF EMBODIMENTS

Embodiments of an estimating program, an estimating method, and an estimating system disclosed in the present application will hereinafter be described in detail, by way of example only, with reference to the drawings. It is to be noted that the present technology is not limited by the present embodiments.

[First Embodiment]

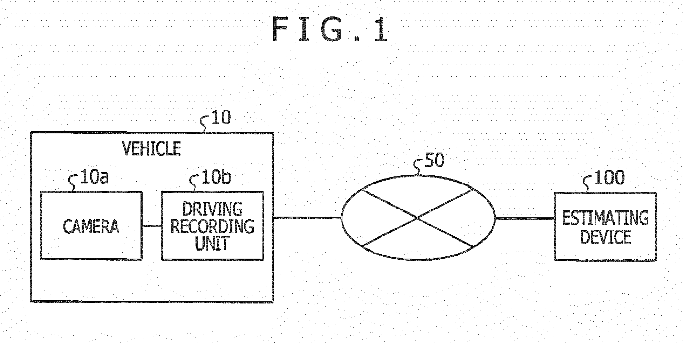

FIG. 1 is a diagram illustrating an example of an estimating system according to a present first embodiment. As illustrated in FIG. 1, the estimating system includes a vehicle 10 and an estimating device 100. As an example, the vehicle 10 has a function of a car navigation system, and includes a camera 10a and a driving recording unit 10b.

As an example in the present first embodiment, an example will be illustrated in which the camera 10a as a target of estimation of lens distortion and the like (an internal parameter and an external parameter) is installed in the vehicle 10. However, without limitation to this, the vehicle 10 may be another moving body. Another moving body corresponds to a train, a mobile robot, a drone, or the like.

The camera 10a is a camera that photographs video data. As an example, the video data is data in which a plurality of image frames are arranged in time series. The camera 10a outputs the video data to the driving recording unit 10b.

The driving recording unit 10b is a processing unit that accumulates the video data obtained from the camera 10a. The driving recording unit 10b accesses a network 50 via a radio communicating device (not illustrated) to couple to the estimating device 100. The driving recording unit 10b transmits the video data to the estimating device 100 via the network 50.

The estimating device 100 is a device that receives the video data from the driving recording unit 10b of the vehicle, and estimates the internal and external parameters of the camera 10a based on the video data. The estimating device 100 registers relation between a straight line and curves by setting, as a starting point, a feature of a straight line detected in a central portion having a small distortion in an image frame, and tracking the curves corresponding to the straight line from a plurality of subsequent image frames. The estimating device 100 estimates the distortion of the camera based on the registered relation between the straight line and the curves.

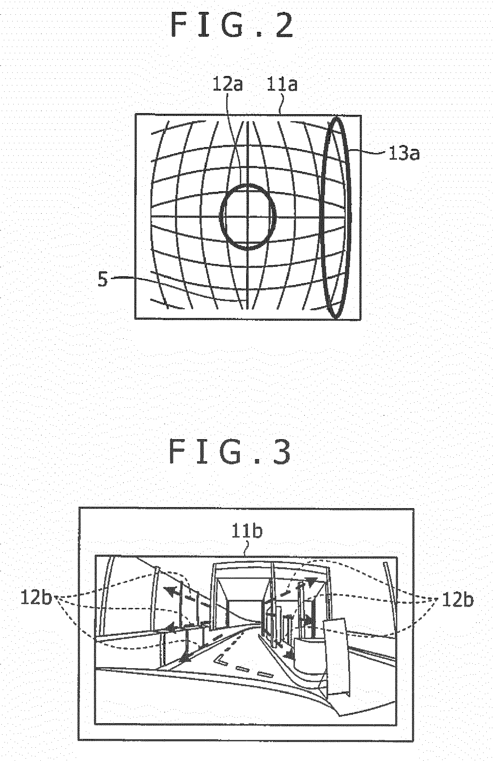

FIG. 2 is a diagram of assistance in explaining a first point of attention of the present technology. An image frame 11a is an image frame obtained by photographing, by a camera, a straight line lattice pattern in a real space from a direct front. Even when the straight line lattice pattern is photographed from the direct front, lattice lines appear to be curved due to distortion of a camera lens. For example, as indicated by a line segment 12a, a line segment near an optical axis 5 has a small curvature, whereas a line segment 13a distant from the optical axis 5 (line segment 13a in a peripheral part) has a large curvature. For example, the first point of attention is that there is a large distortion in the peripheral part, whereas there is a small distortion in the central portion of the image.

FIG. 3 is a diagram of assistance in explaining a second point of attention of the present technology. The video data 11b is photographed by the camera 10a installed in the front of the vehicle 10. As the vehicle 10 moves forward, objects appearing around a center of the image apparently move in directions of arrows 12b. Positions at which the objects appear continuously move in the directions of peripheral edges with time. For example, the second point of attention is that in the video data, information is recorded such that an object appearing in the center of the video continuously moves to a peripheral edge when the vehicle 10 moves forward, and an object continuously moves from a peripheral edge to the center when the vehicle 10 moves backward.

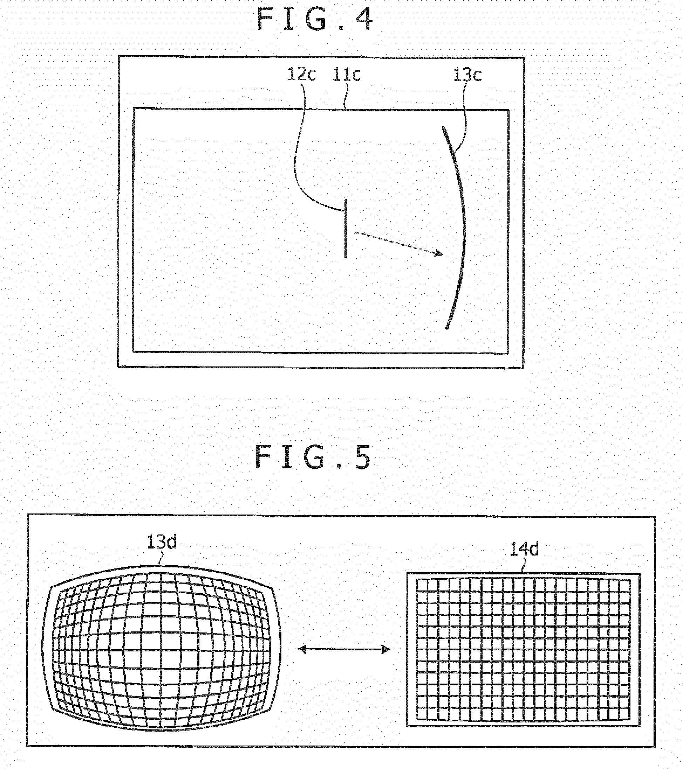

FIG. 4 is a diagram of assistance in explaining processing of an estimating device based on the first and second points of attention. As an example, the estimating device 100 extracts a straight line 12c from a central region in which distortion of an image frame 11c does not occur. The estimating device 100 repeatedly performs processing of extracting a distorted curve 13c corresponding the straight line 12c by image tracking between image frames arranged in time series, and accumulating the line segment 12c and the curve 13c. It is thereby possible to extract a line group that may be guaranteed to be straight lines in a real space without advance information on the target shape of a marker or the like, and estimate the internal parameter of the camera 10a based on the group of these lines.

FIG. 5 is a diagram of assistance in explaining an example of estimation of an internal parameter. A line group 13d represents straight lines and curves accumulated by the processing described with reference to FIG. 4. The estimating device 100 estimates the internal parameter of the camera 10a by utilizing geometric relation such that the line group 13d includes straight lines in a real space. Estimating the camera parameter enables distortion correction into a perspective projection model 14d, for example. An external parameter may also be estimated by using the perspective projection model 14d.

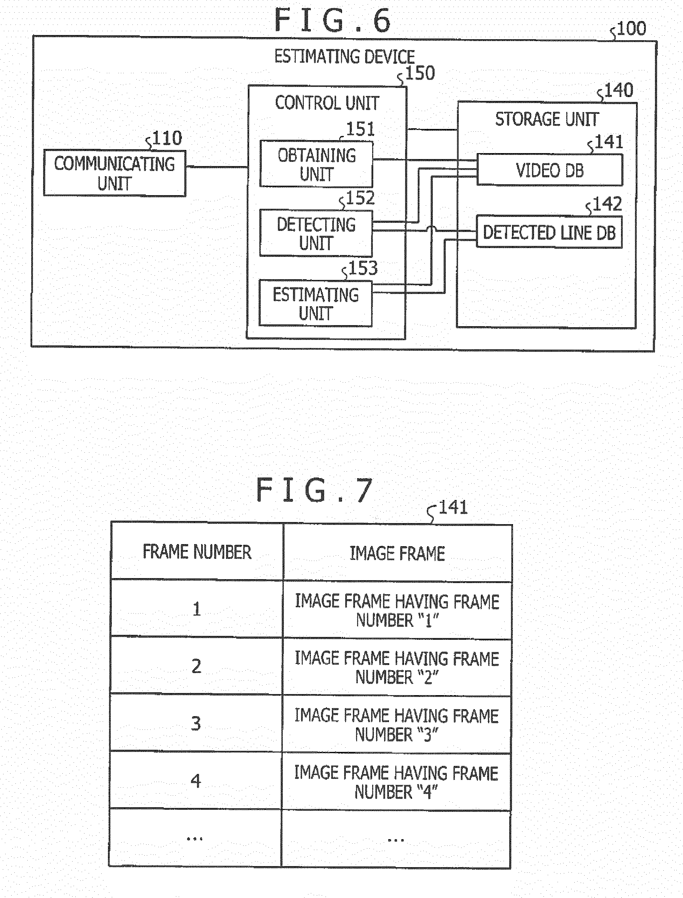

FIG. 6 is a functional block diagram illustrating a configuration of an estimating device according to the present embodiment. As illustrated in FIG. 6, the estimating device 100 includes a communicating unit 110, an input unit 120 (not illustrated), a display unit 130 (not illustrated), a storage unit 140, and a control unit 150.

The communicating unit 110 is a communicating device that receives video data from the driving recording unit 10b of the vehicle 10 via the network 50. The communicating unit 110 outputs the video data to the control unit 150.

The storage unit 140 includes a video data base (DB) 141 and a detected line DB 142. The storage unit 140 corresponds to a semiconductor memory element such as a random access memory (RAM), a read only memory (ROM), or a flash memory and a storage device such as a hard disk drive (HDD).

The video DB 141 is a database that stores video data. FIG. 7 is a diagram illustrating an example of a data structure of the video DB. As illustrated in FIG. 7, the video DB 141 associates frame numbers with image frames. A frame number is a number that uniquely identifies an image frame. The image frame is an image frame included in the video data. The image frames are arranged in time series. The smaller the frame number, the more previous the image frame photographed by the camera 10a.

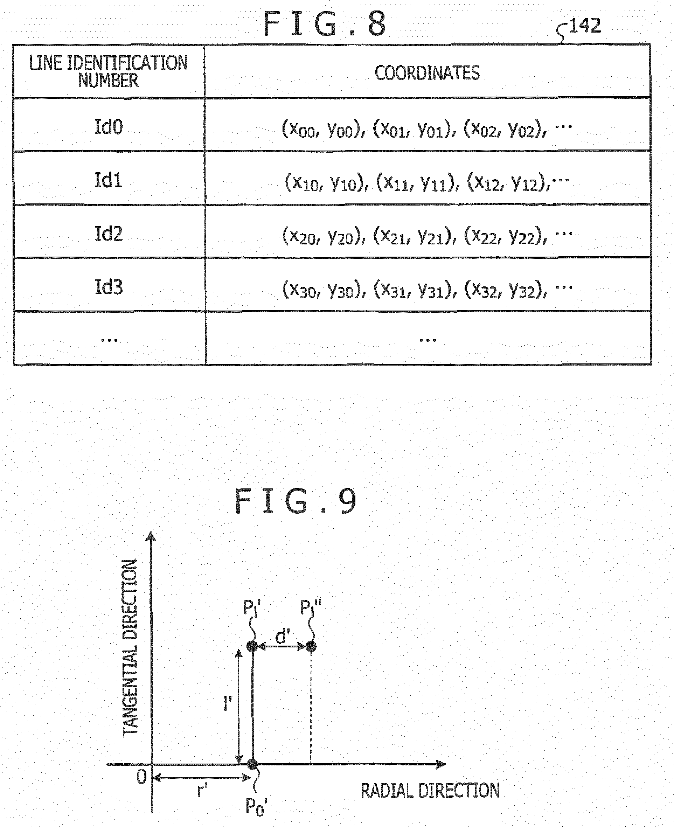

The detected line DB 142 is a database that stores information on line segments (straight lines or curves) detected from each image frame. FIG. 8 is a diagram illustrating an example of a data structure of the detected line DB. As illustrated in FIG. 8, the detected line DB 142 associates identification numbers with coordinates. In the detected line DB 142, an identification number is information that uniquely identifies a line segment. Coordinates represent coordinates of each pixel constituting a line segment. For example, a line segment having an identification number "Id0" is formed by connecting coordinates $(x_{00}, y_{00})$, $(x_{01}, y_{01})$, $(x_{02}, y_{02})$, ...

The description returns to FIG. 6. The control unit 150 includes an obtaining unit 151, a detecting unit 152, and an estimating unit 153. The control unit 150 may be implemented by a central processing unit (CPU), a micro processing unit (MPU), or the like. In addition, the control unit 150 may also be implemented by hard wired logic such as an application specific integrated circuit (ASIC) or a field programmable gate array (FPGA).

The obtaining unit 151 is a processing unit that obtains video data photographed by the camera 10a. The obtaining unit 151 stores the obtained video data in the video DB 141. As an example, the video data is data in which a plurality of image frames are arranged in time series, and the image frames are assigned frame numbers in ascending order.

The detecting unit 152 detects a straight line from the central portion of a first image frame included in the video data stored in the video DB 141. The detecting unit 152 sets a feature of the detected straight line as a starting point, and detects a plurality of curves corresponding to the straight line from a plurality of second image frames subsequent to the first image frame. The detecting unit 152 stores information on the detected straight line and the detected curves in the detected line DB 142. In the following description, the straight line and the curves detected by the detecting unit 152 will be described as "detected lines," as appropriate.

As will be described in the following, the detecting unit 152 sequentially performs non-distorted region setting processing, straight line detection processing, endpoint tracking processing, inter-endpoint line element search processing, and detected line output processing.

Description will be made of an example of the "non-distorted region setting processing" performed by the detecting unit 152. A non-distorted region is a region in which a straight line is formed also in an image after distortion correction of an image before the correction (image frame photographed during traveling of the vehicle 10). The wider the angle of view of the lens, the narrower the non-distorted region. The wider the angle of view of the lens, the larger an amount of distortion. Therefore, a non-distorted region for an assumed maximum angle of view is also a non-distorted region in a camera with a narrower angle of view. In the present embodiment, one non-distorted region for an assumed maximum angle of view is set. The assumed maximum angle of view is set in advance in view of the drive recorder or a service in a subsequent stage.

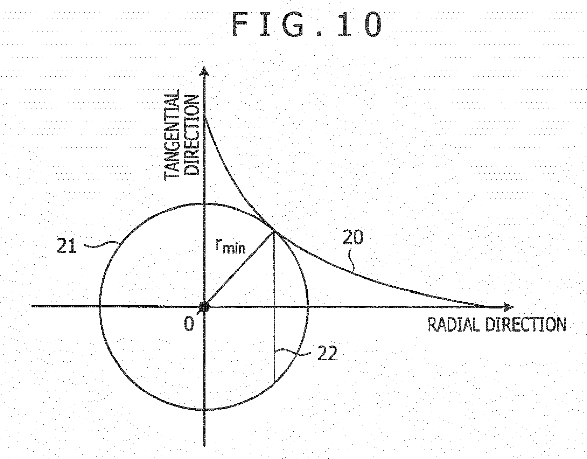

FIG. 9 and FIG. 10 are diagrams of assistance in explaining non-distorted region setting processing. Description will be made of FIG. 9. FIG. 9 is a diagram illustrating coordinate relations after distortion correction. An axis of abscissas is an axis in a radial direction with respect to an optical axis. An axis of ordinates is an axis orthogonal to the radial direction (axis in a tangential direction). An origin "0" is set as the center of the optical axis. In this case, attention is directed to relation between one point $P_0$ on the axis of abscissas, the point $P_0$ being present on a straight line before the distortion correction, and $P_l$ on a tangent corresponding to the point $P_0$ ($P_0$ and $P_l$ are not illustrated). A reason for directing attention to the relation to the tangent is that a straight line appearing in the tangential direction with respect to the optical axis is most strongly affected by the distortion correction.

As an example, a point on a tangent corresponding to $P_0$' $(r', 0)$ after the distortion correction is set as $P_l$', and the length of a line segment connecting $P_0$' and $P_l$' to each other is set as $l'$. When parallel straight line relation of the line segment $l'$ to the axis in the tangential direction is observed, the two points $P_0$' and $P_l$' maintain the straight line relation before and after the distortion correction.

On the other hand, supposing that a point on the tangent corresponding to $P_0$' $(r', 0)$ after the distortion correction is $P_l$", a line segment connecting $P_0$' and $P_l$" to each other is not observed to have parallel straight line relation to the axis in the tangential direction, and therefore indicates a curved state. To be precise, there is a distortion, if very small, in the tangential direction as long as there is a distance from a point of tangency, and the more the distance from the point of tangency, the higher a degree of distortion.

The detecting unit 152 sets a threshold value $d_{th}$ for a distance variable $d'$, and obtains a maximum length $l'$ not exceeding $d_{th}$ for each $r'$. For example, the distance variable $d'$ is a value obtained by subtracting $r'$ from the coordinate in the radial direction of $P_l$". Incidentally, $r'$ and $l'$ are the values after the correction. Thus, the detecting unit 152 calculates the maximum length $l'$ by performing the above-described processing after calculating the values after the correction based on integral pixel values before the correction.

The description proceeds to FIG. 10. The detecting unit 152 sets a non-distorted region from the value of $l'$ obtained for each distance ($r'$: distance from the optical axis center in the radial direction). In FIG. 10, an axis of abscissas is an axis in the radial direction at a time of calculation of $l'$, and an axis of ordinates is an axis in the tangential direction. An origin "0" is the optical axis center of an image frame before the correction. A line segment 20 is a line segment corresponding to $l'$. Before the correction of distortion (image converted value before the correction), $l'$ is of a curved type as indicated by the line segment 20. Therefore, straight lines within a circle 21 in which a shortest distance $r_{min}$ from the origin "0" to the line segment 20 is obtained may each be regarded as a straight line. For example, the detecting unit 152 detects a straight line 22 within the circle 21 as a straight line. The circle 21 is a region in which to detect a straight line (non-distorted region).

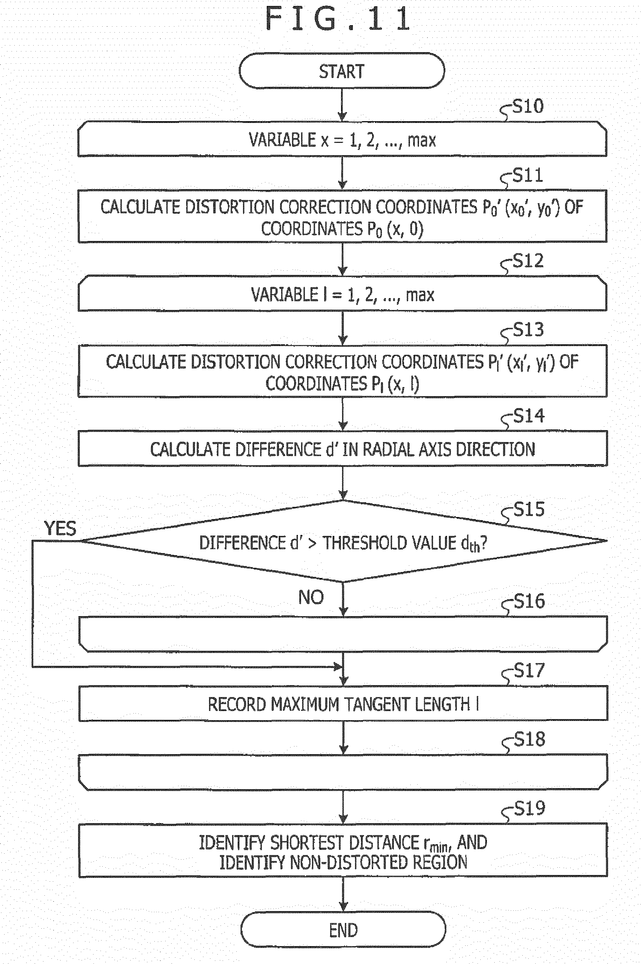

The following description will be made of an example of a processing procedure of non-distorted region setting processing. FIG. 11 is a flowchart illustrating a processing procedure of non-distorted region setting processing. In FIG. 11, processing from step S10 to step S18 is a loop based on a variable x (x = 1, 2, ..., max) of input image resolution. The variable x corresponds to r' illustrated in FIG. 9. In a case where the resolution is different between the horizontal direction and vertical direction of the image frame, it suffices to loop based on a higher resolution. Incidentally, a maximum tangent length l corresponding to x = 0 is set as $l_{max}$.

The detecting unit 152 calculates the distortion correction coordinates $P_0'(x_0', y_0')$ of coordinates $P_0(x, 0)$ where x is not 0 (step S11).

Processing from step S12 to step S16 is a loop based on a variable l (l = 1, 2, ..., max) of a tangential pixel length before the distortion correction.

The detecting unit 152 calculates the distortion correction coordinates $P_l'(x_l', y_l')$ of coordinates $P_l(x, l)$ (step S13). For example, the detecting unit 152 calculates coordinates $P(x_c, y_c)$ after the distortion correction from coordinates $P(x_e, y_e)$ before the distortion correction based on Equations (1) to (4). $l_{max}$ included in Equation (2) is set as the resolution of the image frame. $\theta_{max}$ is an assumed maximum angle of view. Incidentally, the value of $y_0'$ is zero at all times.

$$r = \sqrt{x_e^2 + y_e^2} \qquad \cdots (1)$$

$$f = \frac{l_{max}}{\theta_{max}} \qquad \cdots (2)$$

$$x_c = \frac{f \tan\left(\frac{r}{f}\right)}{r} x_e \qquad \cdots (3)$$

$$y_c = \frac{f \tan\left(\frac{r}{f}\right)}{r} y_e \qquad \cdots (4)$$

The detecting unit 152 calculates a difference d' in the radial direction based on Equation (5) (step S14). Incidentally, a difference in y ($|y_l'-y_0'|$) indicates extension or contraction of the straight line, and does not contribute to distortion of the line. The detecting unit 152 therefore does not make determination with regard to the difference in y.

$$d' = |x_l' - x_0'| \qquad \cdots (5)$$

The detecting unit 152 determines whether or not the difference d' is larger than the threshold value $d_{th}$ by using the threshold value $d_{th}$ determined in advance (step S15). When the difference d' is larger than the threshold value $d_{th}$ (step S15, Yes), the detecting unit 152 makes a transition to step S17. When the difference d' is not larger than the threshold value $d_{th}$ (step S15, No), on the other hand, the detecting unit 152 makes a transition to step S16.

The detecting unit 152 records the maximum tangent length l (step S17). For example, when the detecting unit 152 makes the variable x loop in units of one pixel, the detecting unit 152 records a value obtained by subtracting one from the maximum tangent length l as the maximum tangent length l.

After going through the loop from step S10 to S18, the detecting unit 152 identifies the shortest distance $r_{min}$ based on each maximum tangent length l (corresponding to l' in FIG. 10), and identifies a non-distorted region, as described with reference to FIG. 10 (step S19).

In the present embodiment, the straight line detecting region is set supposing that the optical axis center is sufficiently close to the vicinity of the image, as an example. However, the detecting unit 152 may adjust the straight line detecting region based on an effect of a deviation of the optical axis center. In addition, when consideration is given to a difference in maximum angle of view between vertical and horizontal pixels, the detecting unit 152 may, for example, generate respective curves (corresponding to the line segment 20 in FIG. 10) for a vertical maximum angle of view and a horizontal maximum angle of view and identify $r_{min}$ for an elliptic region obtained by making the two curves orthogonal to each other.

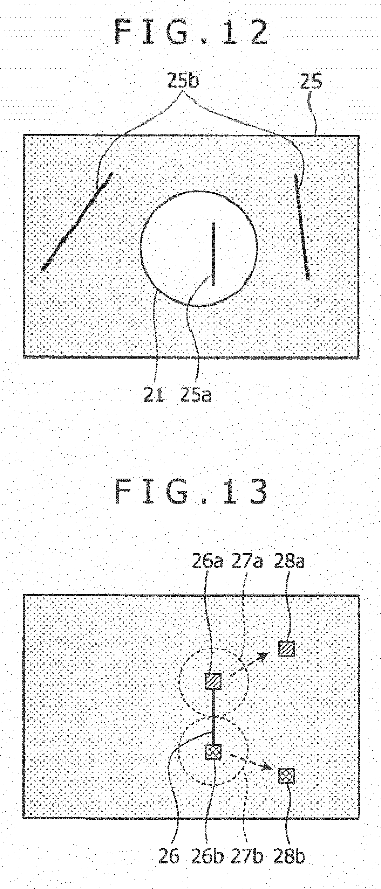

Description will next be made of an example of the "straight line detection processing" performed by the detecting unit 152. The detecting unit 152 sets a non-distorted region in the image frame, and detects a straight line present in the non-distorted region. FIG. 12 is a diagram of assistance in explaining straight line detection processing. As an example, the detecting unit 152 obtains an edge image 25 by performing edge detection on the image frame. The detecting unit 152 uses a publicly known edge detecting technology typified by a Canny algorithm. A circle 21 represents the non-distorted region obtained by the non-distorted region setting processing.

The detecting unit 152 detects straight lines 25a and 25b from the edge image 25 by using a Hough transform algorithm. The detecting unit 152 identifies the straight line 25a included in the non-distorted region (circle 21) among the straight lines 25a and 25b. The straight lines 25b are line segments detected from a region in which distortion may occur, and are therefore not used in subsequent processing.

Description will next be made of an example of the "endpoint tracking processing" performed by the detecting unit 152. The detecting unit 152 image-tracks a detected line in a present image frame by using a previous image frame and a detected line in the previous image frame.

FIG. 13 is a diagram of assistance in explaining endpoint tracking processing. In FIG. 13, a line segment 26 is a straight line (for example, the straight line 25a illustrated in FIG. 12) or a curve detected in the previous image frame. Endpoints of the line segment 26 are set as endpoints 26a and 26b, respectively.

The detecting unit 152 extracts a local image 27a having the endpoint 26a as a center thereof and a local image 27b having the endpoint 26b as a center thereof in the previous image frame. The detecting unit 152 identifies coordinates on the present image frame, the coordinates matching the local images 27a and 27b, by performing matching between the present image frame and the local images 27a and 27b. For example, the detecting unit 152 uses a publicly known matching technology such as template matching or feature quantity matching in the local images.

In the example illustrated in FIG. 13, coordinates matching the local image 27a are set as coordinates of a point 28a, and coordinates matching the local image 27b are set as coordinates of a point 28b. For example, a tracking result of the endpoint 26a is the point 28a. A tracking result of the endpoint 26b is the point 28b.

Incidentally, both endpoints of the detected line segment are often an upper end and a lower end of a pole or a building in the video data, and tend to have a unique edge component or a unique corner feature component as an image region as compared with an adjacent region. In addition, though the whole of the straight line is distorted toward a peripheral edge, the distortion is small when limited to a near time and a local region, and tracking may be performed even by an existing matching technology in which distortion is not considered.

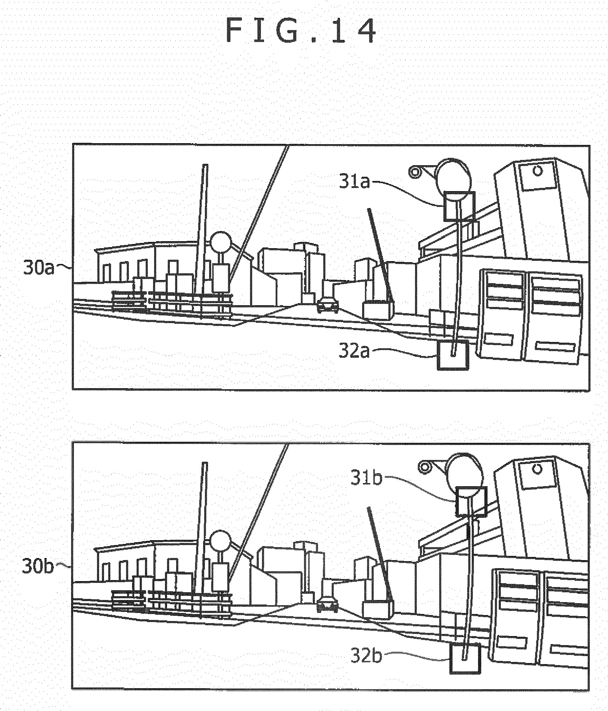

FIG. 14 is a diagram illustrating an example of an image change at a near time. In FIG. 14, suppose that an image frame 30a is an image frame photographed at time t, and that an image frame 30b is an image frame photographed at time t + 0.1 seconds. For example, a local image 31a moves to a local image 31b, and a local image 32a moves to a local image 32b. However, there are apparently no large differences between the local images, and therefore endpoints may be tracked by the processing described with reference to FIG. 13.

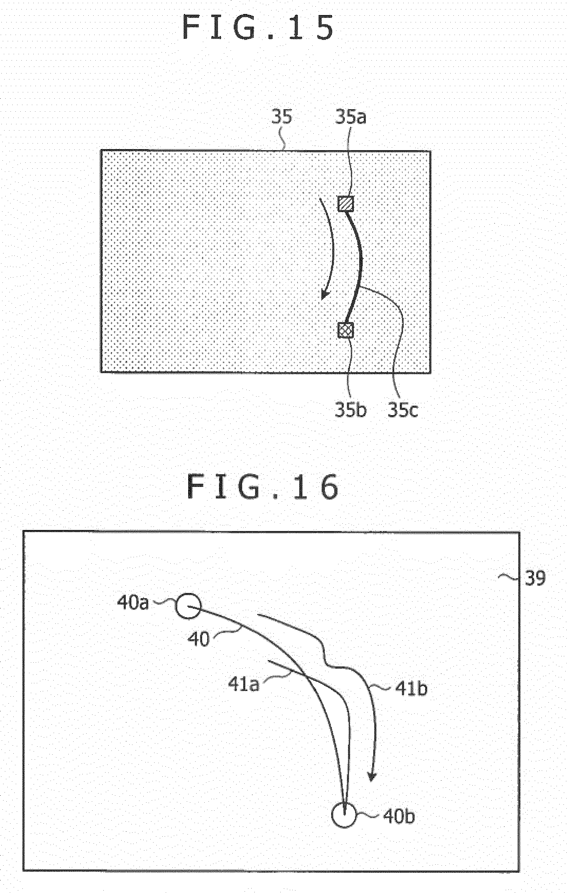

Description will next be made of an example of the "inter-endpoint line element search processing" performed by the detecting unit 152. FIG. 15 is a diagram of assistance in explaining inter-endpoint line element search processing. An endpoint 35a in FIG. 15 corresponds to the point 28a in FIG. 13. An endpoint 35b in FIG. 15 corresponds to the point 28b in FIG. 13. The detecting unit 152 may obtain a curve 35c in which an original straight line is distorted, by sequentially searching for edge pixels (searching for line elements) between the endpoint 35a and the endpoint 35b of an edge image 35.

FIG. 16 is a diagram of assistance in explaining problems in searching for line elements. Endpoints 40a and 40b are endpoints tracked by the endpoint tracking processing. For example, an endpoint 40a corresponds to the point 28a in FIG. 13. An endpoint 40b corresponds to the point 28b in FIG. 13. A straight line curved due to lens distortion is depicted as a curve connecting the endpoint 40a and the endpoint 40b to each other in an edge image 39. Suppose, for example, that a line segment 40 is set as a curve as a target of detection. Here, a manner of bending of the curve connecting the endpoints 40a and 40b to each other is unknown, and therefore it is difficult to select a corresponding line element group by some curve model fitting.

The detecting unit 152 traces edge pixels from one endpoint 40a to the other endpoint 40b, and obtains a line element group as a curve connecting both ends to each other. At this time, there is a possibility of erroneously tracing other lines such as line segments 41a and 41b.

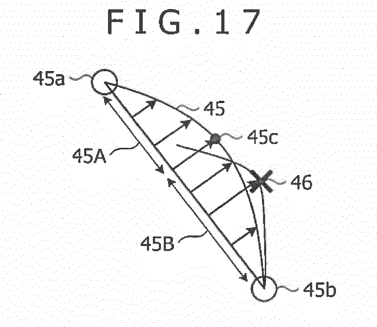

FIG. 17 is a diagram of assistance in explaining a method of solving problems in searching for line elements. Endpoints 45a and 45b are endpoints tracked by the endpoint tracking processing. For example, an endpoint 45a corresponds to the point 28a in FIG. 13, and an endpoint 45b corresponds to the point 28b in FIG. 13.

In the present embodiment, attention is directed to a fact that an effect of lens distortion makes a straight line a convex curve. For example, the detecting unit 152 uses a constraint condition such that a line segment based on the endpoints 45a and 45b has a convex relation. The detecting unit 152 selects only an edge image that may be traced from the endpoint 45a based on the constraint condition, and thereby extracts a curve while excluding an effect of the mixing in of other curves.

In the example illustrated in FIG. 17, as for a distance of a straight line connecting the endpoint 45a and the endpoint 45b to each other, a distance from the straight line to the curve monotonically increases in an interval 45A, and after passing through a maximum 45c, the distance from the straight line to the curve monotonically decreases in an interval 45B. Based on this constraint condition, even when another curve such as a line segment 46 is mixed in, the line segment 46 may be excluded because the line segment 46 does not monotonically decrease in the interval 45B. For example, the detecting unit 152 may select a line segment 45 satisfying the constraint condition.

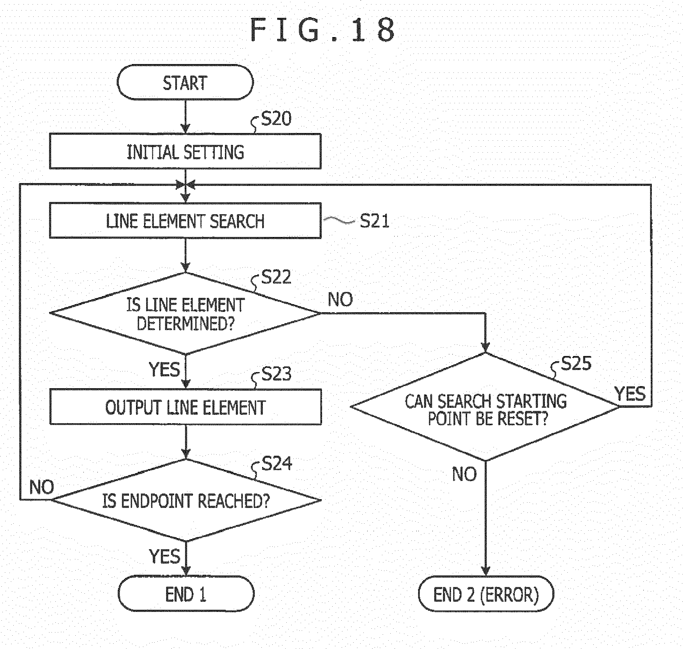

The following description will be made of an example of a processing procedure of inter-endpoint line element search processing. FIG. 18 is a flowchart illustrating a processing procedure of inter-endpoint line element search processing. As illustrated in FIG. 18, the detecting unit 152 makes an initial setting for performing a line element search (step S20). For example, in the initialization setting of step S20, the detecting unit 152 generates an edge image by binarizing a present image frame, and obtains pixel coordinates of both endpoints of a line segment obtained by the endpoint tracking processing.

The detecting unit 152 performs a line element search (step S21). In step S21, the detecting unit 152 searches for one pixel of a line element constituting a curve.

The detecting unit 152 determines whether or not a line element is determined (step S22). When a line element is determined (step S22, Yes), the detecting unit 152 proceeds to step S23. When no line element is determined (step S22, No), on the other hand, the detecting unit 152 proceeds to step S25.

The detecting unit 152 outputs the line element (step S23). The detecting unit 152 determines whether or not an endpoint is reached (step S24). When the endpoint is reached (step S24, Yes), the detecting unit 152 ends the line element search. When the endpoint is not reached (step S24, No), the detecting unit 152 proceeds to step S21.

The description proceeds to step S25. The detecting unit 152 determines whether or not a search starting point can be reset (step S25). In step S25, the detecting unit 152 performs resetting processing for returning to one of pixels obtained thus far. When the resetting is possible (step S25, Yes), the detecting unit 152 proceeds to step S21. When the resetting is not possible (step S25, No), on the other hand, the detecting unit 152 determines that it is difficult to obtain a curve between the terminals, and ends the processing.

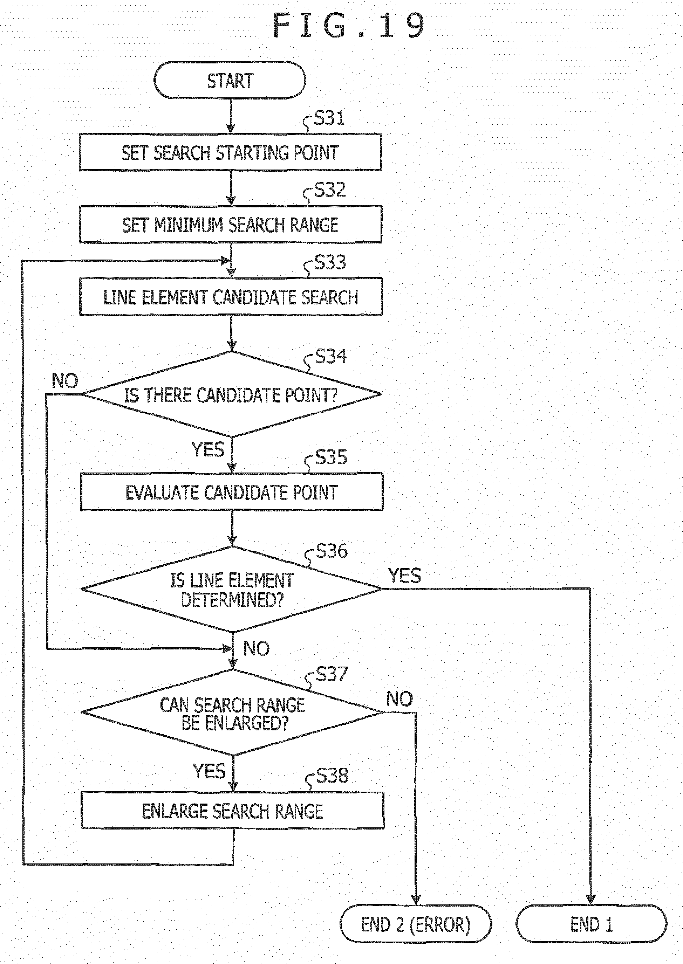

The processing of the line element search illustrated in step S21 in FIG. 18 will next be described concretely. FIG. 19 is a flowchart illustrating a processing procedure of the line element search. As illustrated in FIG. 19, the detecting unit 152 sets a search starting point (step S31). In step S31, the search starting point is the coordinates of one of endpoints at a time of an initial setting. When a line element is already obtained, the detecting unit 152 sets the coordinates of the newest line element.

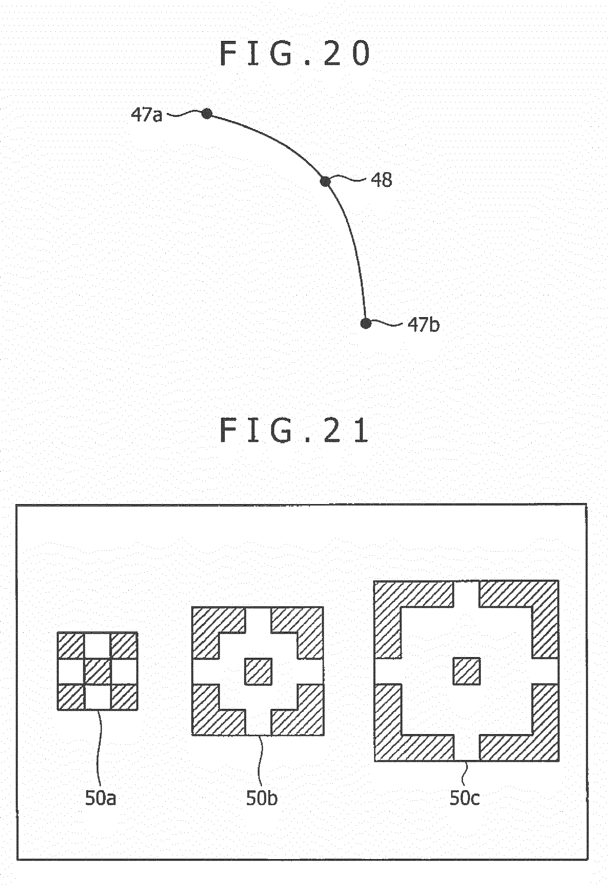

FIG. 20 is a diagram of assistance in explaining processing of the line element search. As an example, endpoints identified by the endpoint tracking processing are set as endpoints 47a and 47b. At a time of an initial setting, the detecting unit 152 sets the coordinates of the endpoint 47a as the search starting point. Incidentally, when the detecting unit 152 searches for an edge image on a pixel-by-pixel basis, and can perform tracing up to a point (line element) 48, the detecting unit 152 sets the coordinates of the line element 48 as the search starting point.

The description returns to FIG. 19. The detecting unit 152 sets a pixel search range to a minimum (step S32). FIG. 21 is a diagram of assistance in explaining an example of mask images. In step S32, the detecting unit 152 sets the pixel search range by using a mask image 50a illustrated in FIG. 21. The mask image 50a is a mask image that sets, as a search target, four upper, lower, left, and right neighboring pixels, and the parts of white pixels in the diagram constitute a search range. Incidentally, a mask image 50b is a mask image that sets, as a search target, 12 upper, lower, left, and right neighboring pixels. A mask image 50c is a mask image that sets, as a search target, 28 upper, lower, left, and right neighboring pixels.

The description returns to FIG. 19. The detecting unit 152 performs a line element candidate search (step S33). For example, in step S33, the detecting unit 152 filters the edge image in the search range set in step S32, and sets coordinates at which an edge pixel value remains as line element candidate points. At this time, the detecting unit 152 excludes already evaluated coordinates or coordinates already confirmed to be a line element from the line element candidate points.

The detecting unit 152 determines in step S33 whether or not there is at least one line element candidate point (step S34). When there is at least one line element candidate point (step S34, Yes), the detecting unit 152 proceeds to step S35. When there is not at least one line element candidate point (step S34, No), on the other hand, the detecting unit 152 proceeds to step S37.

The detecting unit 152 evaluates whether or not each line element candidate point is a pixel favorable as a next line element (step S35). When a line element candidate point evaluated as a pixel favorable as a next line element is obtained, the detecting unit 152 sets such a line element candidate point as a line element (step S36, Yes), and ends the processing of the line element search.

When a line element candidate point evaluated as a pixel favorable as a next line element is not obtained, on the other hand, the detecting unit 152 determines that the line element is not determined (step S36, No), and proceeds to step S37.

The detecting unit 152 determines whether or not the search range can be enlarged (step S37). In step S37, when the currently set mask image is the mask image 50a or the mask image 50b, the detecting unit 152 determines that the search range can be enlarged (step S37, Yes), enlarges the search range (step S38), and proceeds to step S33. For example, in step S38, when the currently set mask image is the mask image 50a, the detecting unit 152 enlarges the search range by setting the mask image 50b. When the currently set mask image is the mask image 50b, the detecting unit 152 enlarges the search range by setting the mask image 50c. Enlarging the search range enables pixels to be traced even when a manner of bending is unknown. In addition, even when a part of edge pixels is missing, a pixel beyond the missing part may be set as a candidate point.

When the currently set mask image is of a maximum size (for example, the mask image 50c), on the other hand, the detecting unit 152 determines in step S37 that enlargement is not possible (step S37, No), determines that no line element is obtained, and ends the search.

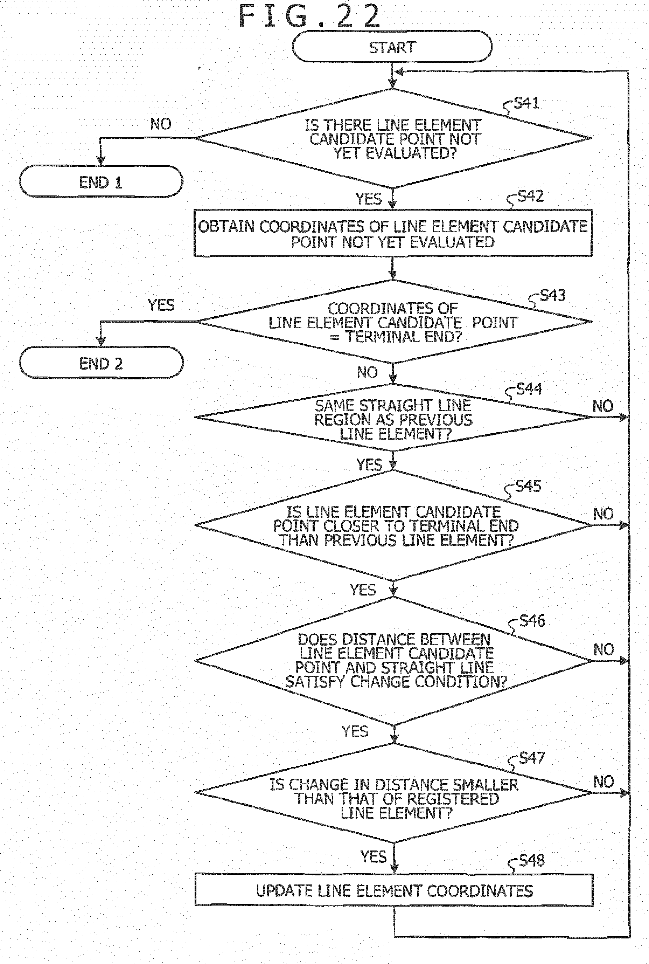

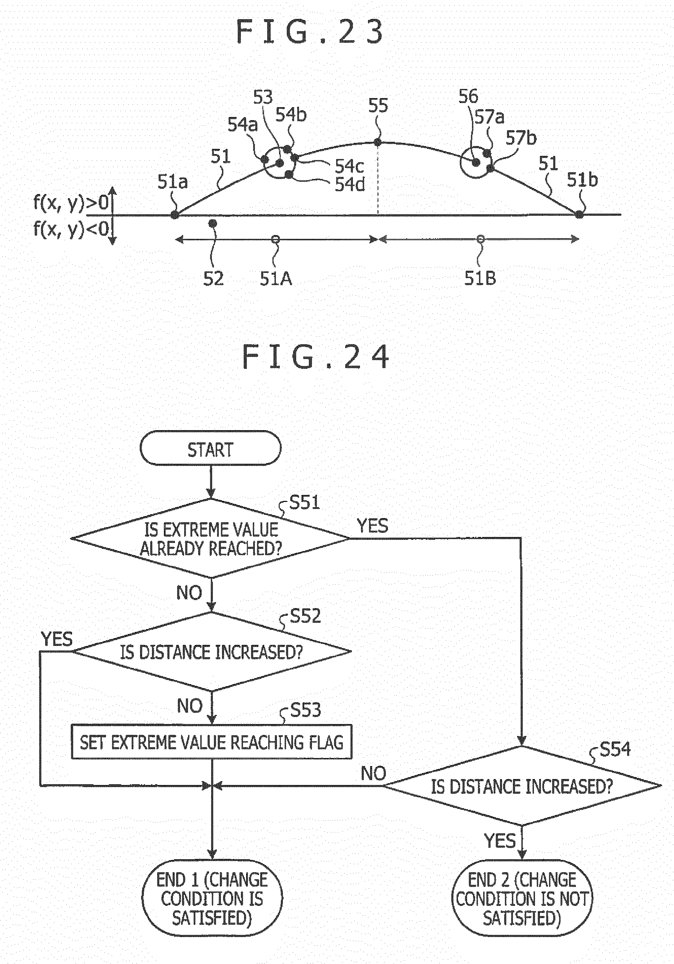

Description will next be made of an example of the line element determination processing described in step S22 in FIG. 18. FIG. 22 is a flowchart illustrating a processing procedure of line element determination. FIG. 23 is a diagram of assistance in explaining line element determination processing.

In FIG. 23, an endpoint 51a and an endpoint 51b are included.

The endpoint 51a is set as a "starting end" of a curve 51, and the endpoint 51b is set as a "terminal end" of the curve 51. Suppose that the curve 51 is a curve in which a part of edge pixels is missing. The curve 51 is a straight line curved due to lens distortion. Therefore, at other than both endpoints 51a and 51b, a distance between f(x, y) = 0 and a constituent pixel included in the curve 51 monotonically increases in an interval 51A, and monotonically decreases in an interval 51B. In the flowchart to be described in FIG. 22, each line element candidate point is evaluated by using positional relation between the endpoint 51a and line elements thus far.

The description proceeds to FIG. 22. The detecting unit 152 determines whether or not there is a line element candidate point not yet evaluated (step S41). When there is no line element candidate point not yet evaluated (step S41, No), the detecting unit 152 determines that all line element candidate points are evaluated, and ends the processing of determining line elements.

When there is a line element candidate point not yet evaluated (step S41, Yes), on the other hand, the detecting unit 152 obtains the coordinates of the line element candidate point not yet evaluated (step S42). The detecting unit 152 determines whether or not the line element candidate point not yet evaluated is the terminal end (step S43). When the line element candidate not yet evaluated is the terminal end (step S43, Yes), the detecting unit 152 ends the processing with information that the terminal end is obtained.

When the line element candidate point not yet evaluated is not the terminal end (step S43, No), the detecting unit 152 proceeds to step S44.

The detecting unit 152 determines whether or not the line element candidate point not yet evaluated is in a same straight line region as a previous line element (step S44). As an example, the previous line element is a line element candidate point evaluated as a line element in a previous evaluation. The processing of step S44 will be described concretely. Here, supposing that a straight line passing through the endpoint 51a and the endpoint 51b in FIG. 23 is f(x, y), points other than both endpoints satisfy a condition 1 or a condition 2. For example, the pixel group of the curve 51 all satisfies the condition 1. Therefore, in a case where the previous line element is included in the curve 51, for example, a line element candidate point 52 is not in the same straight line region as the previous line element. On the other hand, in the case where the previous line element is included in the curve 51, line element candidates 54a to 54d are in the same straight line region as the previous line element.

$$f(x, y) > 0 \ldots \text{condition 1}$$

$$f(x, y) < 0 \ldots \text{condition 2}$$

The detecting unit 152 calculates $d_b$ (positive or negative) of the previous line element and the line element candidate point each based on Equations (6), (7), and (8). In Equations (6) and (7), $(x_0, y_0)$ represents the coordinates of the starting end. $(x_1, y_1)$ represents the coordinates of the terminal end. $(x_b, y_b)$ included in Equation (8) represents the coordinates of the line element (line element candidate point).

$$x_v = x_1 - x_0 \qquad \cdots (6)$$

$$y_v = y_1 - y_0 \qquad \cdots (7)$$

$$d_b = \frac{x_v(x_b - x_0) - y_v(y_b - y_0)}{\sqrt{x_v^2 + y_v^2}} \qquad \cdots (8)$$

When the positive or negative of the previous line element and the positive or negative of the line element candidate point match each other, the detecting unit 152 determines that the line element candidate point is in the same straight line region as the previous line element (step S44, Yes), and proceeds to step S45. When the positive or negative of the previous line element and the positive or negative of the line element candidate point do not match each other, on the other hand, the detecting unit 152 determines that the line element candidate point is not in the same straight line region as the previous line element (step S44, No), and proceeds to step S41.

The detecting unit 152 determines whether or not the line element candidate point is closer to the terminal end than the previous line element (step S45). In step S45, the detecting unit 152 calculates a distance $d_{1b}$ between the line element candidate point and the terminal end. In addition, the detecting unit 152 calculates a distance $d_{1a}$ between the previous line element and the terminal point. When the distance $d_{1b}$ is smaller than the distance $d_{1a}$, the detecting unit 152 determines that the line element candidate point is closer to the terminal end than the previous line element (step S45, Yes), and proceeds to step S46. When the distance $d_{1b}$ is larger than the distance $d_{1a}$, on the other hand, the detecting unit 152 determines that the line element candidate point is not closer to the terminal end than the previous line element (step S45, No), and proceeds to step S41. For example, in FIG. 23, supposing that the previous line element is a line element 53, and that the line element candidate point is the line element candidate point 54a, the line element candidate point is not closer to the terminal end than the previous line element, and therefore the line element candidate point 54a is not evaluated as a line element.

The detecting unit 152 determines whether or not a distance between the line element candidate point and the straight line f(x, y) = 0 satisfies a change condition (step S46). In step S46, the detecting unit 152 determines whether or not the line element candidate point satisfies the condition of a monotonic increase or a monotonic decrease with respect to the straight line f(x, y) = 0.

When the distance between the line element candidate point and the straight line f(x, y) = 0 satisfies the change condition (step S46, Yes), the detecting unit 152 proceeds to step S47. When the distance between the line element candidate point and the straight line f(x, y) = 0 does not satisfy the change condition (step S46, No), on the other hand, the detecting unit 152 proceeds to step S41.

The detecting unit 152 determines whether or not a change in the distance is smaller than that of the registered line element (step S47). The processing of step S47 corresponds to processing of determining an optimum line element candidate point from a plurality of line element candidate points. For example, in FIG. 23, in a case where a plurality of line element candidate points 54b, 54c, and 54d are present, the line element candidate 54c connected to the line element 53 most smoothly is selected.

In step S47, the detecting unit 152 calculates $d_{ba}$ based on Equation (9). In Equation (9), $d_b$ is a value calculated by Equation (8), and is the distance between the line element candidate point and the straight line f(x, y) = 0. $d_a$ is a distance between the already determined newest line element and the straight line f(x, y) = 0.

$$d_{ba} = |d_b| - |d_a| \qquad \ldots (9)$$

The detecting unit 152 compares $d_{ba}$ of the line element candidate point calculated last time with $d_{ba}$ of the line element candidate point calculated this time. When $d_{ba}$ of the line element candidate point calculated this time is smaller, the detecting unit 152 determines that the distance change is smaller than that of the registered line element (step S47, Yes), and proceeds to step S48.

When $d_{ba}$ of the line element candidate point calculated this time is not smaller, the detecting unit 152 determines that the distance change is not smaller than that of the registered line element (step S47, No), and proceeds to step S41.

The detecting unit 152 updates line element coordinates (step S48). Step S48 determines that the present line element candidate point of interest is a more favorable point than any already evaluated line element candidate points, and updates the line element coordinates with the coordinates of the present line element candidate point of interest.

Concrete description will next be made of the processing of determining whether or not the distance between the line element candidate point and the straight line satisfies the change condition, the processing being described in step S46 in FIG. 22. FIG. 24 is a flowchart illustrating a processing procedure of processing of determining whether or not a change condition is satisfied. As illustrated in FIG. 24, the detecting unit 152 determines whether or not an extreme value is already reached (step S51). In step S51, the detecting unit 152 refers to an extreme value reaching flag, and makes the determination. An initial value of the extreme value reaching flag is off. When the extreme value reaching flag is off, the detecting unit 152 determines that the extreme value is not reached (step S51, No), and proceeds to step S52. When the extreme value reaching flag is on, on the other hand, the detecting unit 152 determines that the extreme value is reached (step S51, Yes), and proceeds to step S54.

The detecting unit 152 determines whether or not the distance $d_{ba}$ is increased (step S52). When the distance $d_{ba}$ is increased (step S52, Yes), the detecting unit 152 determines that the change condition (monotonic increase) is satisfied, and ends the processing. When the distance $d_{ba}$ is not increased (step S52, No), on the other hand, the detecting unit 152 proceeds to step S53. For example, in FIG. 23, when the already determined last line element is the line element 53, the distance $d_{ba}$ is increased in the cases of the line element candidate points 54a and 54b. The distance $d_{ba}$ is decreased in the case of the line element candidate 54d.

The detecting unit 152 sets the extreme value reaching flag in an on state (step S53), determines that the change condition is satisfied, and ends the processing. The processing illustrated in step S53 corresponds to a case of a first pixel search beyond the extreme value 55 in FIG. 23 or a case where the line element candidate point 54d is selected when the already determined last line element is the line element 53.

The description proceeds to step S54 in FIG. 24. The detecting unit 152 determines whether or not the distance $d_{ba}$ is increased (step S54). When the distance $d_{ba}$ is increased (step S54, Yes), the distance is increased again after the extreme value is reached. The detecting unit 152 therefore determines that the change condition (monotonic decrease) is not satisfied, and ends the processing. For example, in FIG. 23, when the already determined last line element is a line element 56, a line element candidate point 57a monotonically increases, and therefore does not satisfy the change condition.

When the distance $d_{ba}$ is not increased (step S54, No), on the other hand, the distance is decreased after the extreme value is reached. The detecting unit 152 therefore determines that the change condition (monotonic decrease) is satisfied, and ends the processing. For example, in FIG. 23, when the already determined last line element is the line element 56, a line element candidate point 57b decreases monotonically, and therefore satisfies the change condition.

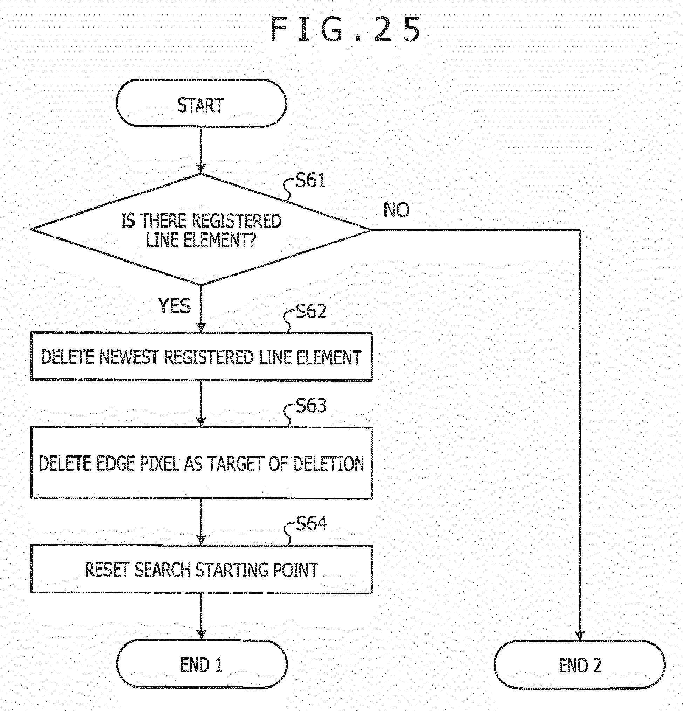

Description will next be made of an example of the processing of determining whether or not the search starting point can be reset, the processing being illustrated in step S25 in FIG. 18. FIG. 25 is a flowchart illustrating a processing procedure of processing of determining whether or not a resetting is possible. As illustrated in FIG. 25, the detecting unit 152 determines whether or not there is a registered line element (step S61). When there is no registered line element (step S61, No), the detecting unit 152 determines that it is difficult to perform the resetting, and ends the processing. When there is a registered line element (step S61, Yes), on the other hand, the detecting unit 152 proceeds to step S62.

The detecting unit 152 deletes the newest registered line element from the detected line DB 142 (step S62). The detecting unit 152 deletes an edge pixel corresponding to the deleted line element from the edge image (step S63). In step S63, the detecting unit 152 deletes the pixel corresponding to the line element as a target of deletion so as not to trace the wrong edge pixel again.

The detecting unit 152 sets a newest line element after the deletion as the search starting point again (determines that the resetting is possible) (step S64), and ends the processing. When the detecting unit 152 performs the processing of FIG. 25, the detecting unit 152 discards the one coordinate point of the newest line element, or returns a state in which there are no coordinates of a line element to be discarded.

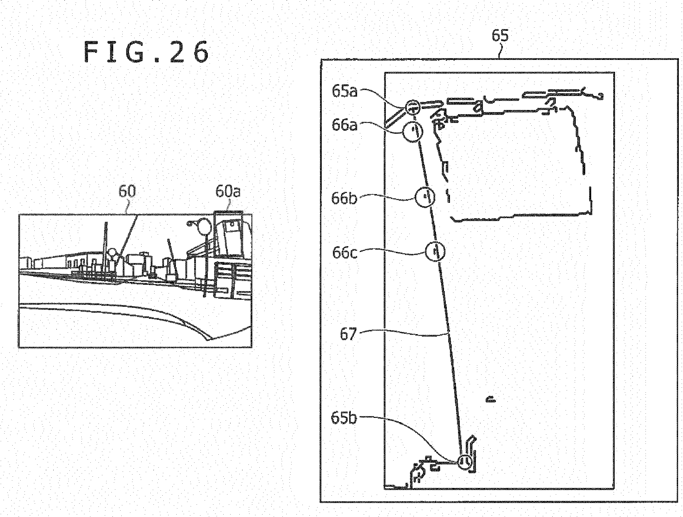

FIG. 26 is a diagram illustrating an example of performing line element extraction. In FIG. 26, an edge image 65 is an edge image corresponding to a partial image 60a of a certain image frame 60. The edge image 65 includes an endpoint 65a and an endpoint 65b. The endpoints 65a and 65b are obtained as a result of the endpoint tracking processing by the detecting unit 152. As illustrated in FIG. 26, when the detecting unit 152 performs the line element detection described above, a curve 67 whose manner of bending is unknown may be obtained. In addition, using various conditions when tracking edge pixels may exclude effects of edge pixels 66a, 66b, and 66c of shade of a building. The detecting unit 152 stores information on the detected line obtained by the detection in the detected line DB 142.

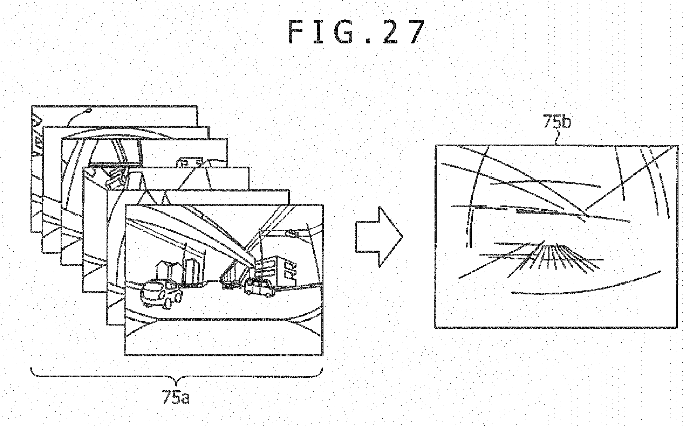

FIG. 27 is a diagram of assistance in explaining an example of detected lines. As illustrated in FIG. 27, the detecting unit 152 detects detected lines based on each image frame 75a. A plurality of detected lines as illustrated in an image 75b, for example, is thereby detected.

The description returns to FIG. 6. The estimating unit 153 is a processing unit that estimates an internal parameter based on information on each detected line, the information being stored in the detected line DB 142. For example, the estimating unit 153 estimates a parameter of lens distortion, optical axis displacement, and focal length such that any of a large number of detected lines may be converted into a straight line by distortion correction.

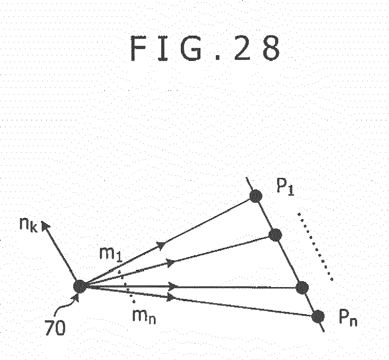

FIG. 28 is a diagram of assistance in explaining processing of the estimating unit. A point 70 in FIG. 28 corresponds to a camera origin (hereinafter, a camera origin 70). Suppose that $P_1$ to $P_n$ are a point sequence K forming a certain detected line. For example, $P_1$ to $P_n$ correspond to a certain curve included in the line group 13d of FIG. 5. In addition, the point sequence K forming the detected line is a point sequence corresponding to coordinates corresponding to a certain line identification number in the detected line DB of FIG. 8 or a part of the coordinates.

In this case, an incident light vector group $m_1$ to $m_n$ connecting the camera origin 70 to the respective points of the point sequence K are ideally on an identical plane. For example, a sole normal vector $n_k$ is orthogonal to $m_1$ to $m_n$. In actuality, $n_k$ orthogonal to all of the incident light vector group is not uniquely obtained due to observation noise or the like. The estimating unit 153 therefore performs the following processing.

The estimating unit 153 expresses the points $P_1$ to $P_n$ by a parameter of lens distortion, optical axis displacement, and focal length. The estimating unit 153 searches for a parameter that minimizes an error of Equation (10) while adjusting the value of the parameter, and estimates the parameter minimizing the error as the internal parameter. In Equation (10), a denotes the number of incident light vectors, and k denotes the number of normal vectors obtained from each incident light vector.

$$\text{Error} = \Sigma_k \Sigma_a (n_k, m_a)^2 \quad \ldots(10)$$

For example, the estimating unit 153 converts the position of each point on a certain detected line in the detected line DB 142 by an estimated internal parameter $X_1$, and obtains points $P_{11}$ to $P_{1n}$. The estimating unit 153 calculates an incident light vector group $m_{11}$ to $m_{1n}$ connecting the obtained points $P_{11}$ to $P_{1n}$ to the camera origin 70, respectively, and calculates an error $E_1$ of a plurality of normal vectors obtained from the incident light vector group $m_{11}$ to min. The estimating unit 153 calculates errors $E_2$ to $E_l$ similarly for other estimated internal parameters $X_2$ to $X_l$. The estimating unit 153 identifies an estimated internal parameter corresponding to a minimum error among the errors $E_2$ to $E_l$ as the internal parameter of an estimation result.

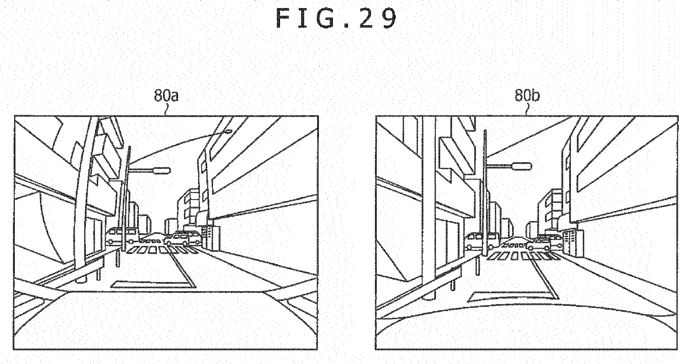

The following description will be made of a fact that distortion may be corrected by the internal parameter estimated by the estimating unit 153. FIG. 29 is a diagram illustrating an example of distortion correction. In FIG. 29, an image frame 80a is an image frame before the correction, and an image frame 80b is an image frame after the correction. The image frames illustrated in FIG. 29 indicate that the internal parameter that can be converted to perspective projection is obtained, and because self-position estimation and peripheral distance measurement based on an image, as typified by a publicly known simultaneous localization and mapping (SLAM) algorithm, become possible, the external parameter of the camera may be obtained.

The estimating unit 153 estimates the external parameter by using the estimated internal parameter and the video data registered in the video DB 141. Incidentally, as in a publicly known technology disclosed in Patent Document (Japanese Laid-open Patent Publication No. 2016-111585), the estimating unit 153 may also estimate the external parameter by using the estimated internal parameter and a local gradient histogram of an image frame or the like.

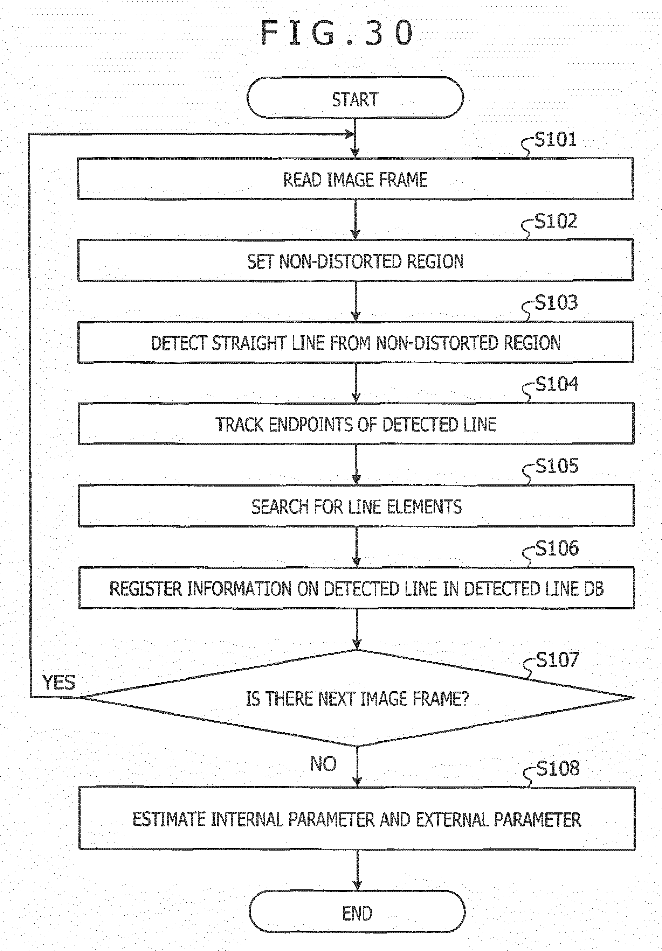

Description will next be made of an example of a processing procedure of the estimating device 100 according to the present embodiment. FIG. 30 is a flowchart illustrating an example of a processing procedure of the estimating device according to the present embodiment. As illustrated in FIG. 30, the detecting unit 152 of the estimating device 100 reads an image frame from the video DB 141 (step S101). The detecting unit 152 sets a non-distorted region (step S102). The detecting unit 152 detects a straight line from the non-distorted region (step S103).

The detecting unit 152 tracks endpoints of the detected line (step S104). The detecting unit 152 searches for line elements (step S105). The detecting unit 152 registers information on the detected line in the detected line DB 142 (step S106).

When there is a next image frame (step S107, Yes), the detecting unit 152 proceeds to step S101. When there is no next image frame (step S107, No), on the other hand, the detecting unit 152 proceeds to step S108. The estimating unit 153 of the estimating device 100 estimates an internal parameter and an external parameter (step S108).

Effects of the estimating device according to the present embodiment will next be described. The estimating device 100 sets, as a starting point, a straight line detected in a central portion having a small distortion in an image frame, and tracks a curve corresponding to the detected straight line from a plurality of subsequent image frames. The estimating device 100 thereby registers information on the curve that is a straight line in a real space in the detected line DB 142. By using the information in the detected line DB 142, it is possible to estimate information on the internal parameter of a camera lens. For example, distortion of the camera lens may be estimated without a marker. In addition, estimating the parameter without a marker may reduce cost of calibration of a camera mounted in a mobile body.

Incidentally, though a degree of distortion of the original straight line distorted by the lens is unknown, the estimating device 100 utilizes a fact that the shape of the line within an image is convex at all times. For example, the estimating device 100 selects pixels constituting a curve between a starting point and an endpoint such that a distance of a straight line from the starting point to the endpoint changes from increase to decrease only once. Thus, even when edge pixels other than original straight line factors are mixed in, such edge pixels are excluded. Accuracy of the detected curve may be thereby improved.

The estimating device 100 calculates a non-distorted region in an image frame based on the resolution of the image frame and the angle of view of the camera. Therefore, a straight line may be detected with high accuracy from the region having a small distortion.

The estimating device 100 detects an edge from a local region in a present image frame, the local region corresponding to a local region centered at an endpoint of a straight line detected from a previous image frame, and detects a curve based on the detected edge. In addition, for a plurality of image frames, the estimating device 100 detects an edge from a local region of a subsequent second image frame, the local region corresponding to a local region centered at an endpoint of a curve in a previous image frame, and detects a curve based on the detected edge. As described with reference to FIG. 14, in a period from the previous image frame to the present image frame, local images move slightly, but apparently have no large differences. Thus, a correct detected line may be detected by such processing.

As described in step S44, the estimating device 100 selects, as a line element, a line element candidate point not yet evaluated that is in a same straight line region as a previous line element. It is thereby possible to select an appropriate line element candidate point easily, and select a curve that is a straight line in a real space.

As described in step S45, the estimating device 100 selects the line element candidate point as a line element when the line element candidate point is closer to a terminal end than the previous line element. It is thereby possible to select an appropriate line element candidate point easily, and select a curve that is a straight line in a real space.

The estimating device 100 connects each line element candidate point included in the local region of the second image frame such that the coordinate values of pixels constituting the curve have one extreme value. It is thereby possible to select an appropriate line element candidate point easily, and select a curve that is a straight line in a real space.

Here, in principle, even with one second image frame, it is possible to detect a straight line and a curve, and obtain the internal parameter. However, two or more curves need to be used in order to use the internal parameter. Therefore, in a case of one second image frame, there is a condition that at least two straight lines be included in the central portion of the first image frame. Hence, in a case where one straight line is included in the central portion of the first image frame, the detecting unit 152 of the estimating device 100 detects at least two or more curves from at least two or more second image frames. In addition, in a case where two straight lines are included in the central portion of the first image frame, the detecting unit 152 detects two or more curves corresponding to the respective straight lines from at least one or more second image frames. The two or more curves may be thereby obtained. Thus, the internal parameter may be calculated appropriately.

[Second Embodiment]

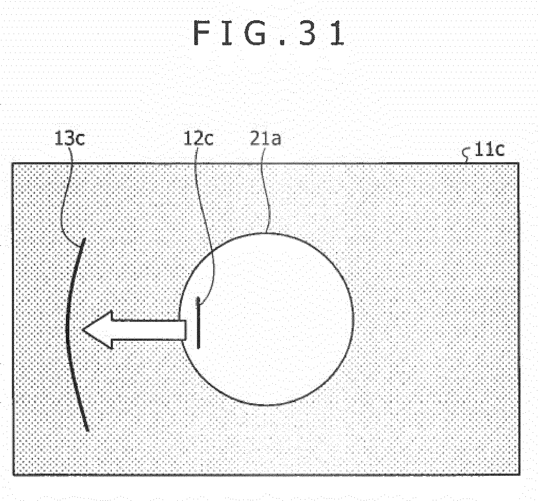

FIG. 31 is a diagram of assistance in explaining a straight line detecting condition of the estimating device described in the foregoing first embodiment. The estimating device 100 sets, as a detection target, a "straight line object whose entire line segment is completely included" in a non-distorted region 21a in which no distortion occurs in an image frame 11c. In an example illustrated in FIG. 31, a line segment 12c is the straight line object completely included in the non-distorted region 21a. By thus setting a condition for the detection target, it is possible to detect a distorted line whose straight line characteristic is definitely guaranteed (for example, a curve 13c identified from the straight line in the non-distorted region 21a).

The detecting unit 152 of the estimating device 100 identifies the non-distorted region 21a by performing the non-distorted region setting processing, and detects the straight line 12c by the straight line detection processing. In addition, the detecting unit 152 sets the detected straight line 12c as a starting point, and performs the endpoint tracking processing and the inter-endpoint line element search processing. The detecting unit 152 thereby obtains the curve 13c corresponding to the straight line 12c. In the description of FIG. 31, the straight line 12c and the curve 13c are illustrated for convenience. However, the straight line 12c is a straight line detected from the image frame 11c at time t, and the curve 13c is a curve detected from an image frame at time t + n.

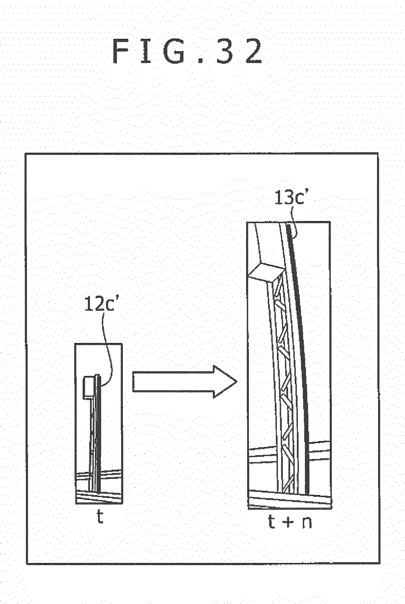

FIG. 32 is a diagram illustrating an example of images of a straight line and a curve. As illustrated in FIG. 32, a straight line 12c' is detected from an object included in a non-distorted region in an image frame at time t. In addition, a curve 13c' is detected in an image frame at time t + n. The curve 13c' is a curve detected with the straight line 12c' as a starting point.

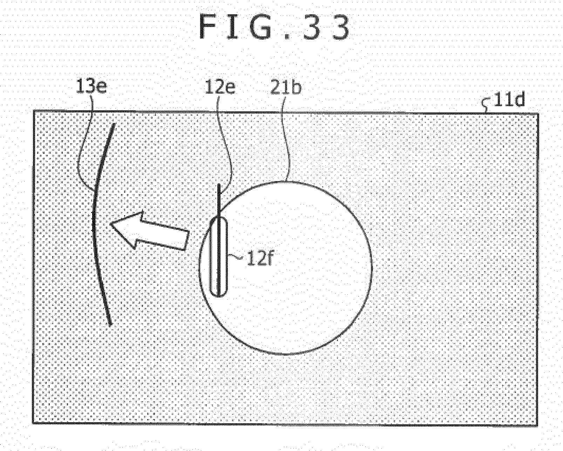

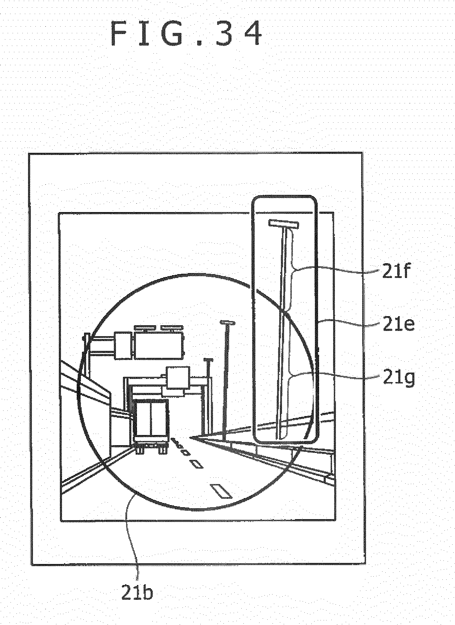

FIG. 33 is a diagram of assistance in explaining improvements over the estimating device described in the foregoing first embodiment. In an actual image frame, there are many straight line objects that partially protrude from a non-distorted region 21b. FIG. 34 is a diagram illustrating an example of an object that partially protrudes from a non-distorted region. In an example illustrated in FIG. 34, an object 21e protrudes from the non-distorted region 21b.

In FIG. 33, as an example, a straight line 12e in an image frame 11d is a straight line object that partially protrudes from the non-distorted region 21b. In a case where the detecting unit 152 of the estimating device 100 detects a curve 13e with the straight line 12e as a starting point, it is difficult to use the whole of the curve 13e as a line segment for calibration. Parts usable as line segments for calibration are a part (straight line 12f) not protruding from the non-distorted region 21b and a curve part corresponding to the straight line 12f in the curve 13e.

However, it is difficult to accurately identify the part corresponding to the straight line 12f in the curve 13e, and therefore the estimating device 100 described in the first embodiment excludes the straight line (straight line object) protruding from the non-distorted region 21b from detection targets. Consequently, when there are a small number of image frames including a "straight line object whose entire line segment is completely included" in the non-distorted region 21b, it takes time to accumulate sufficient line segments to estimate (calibrate) the internal parameter.

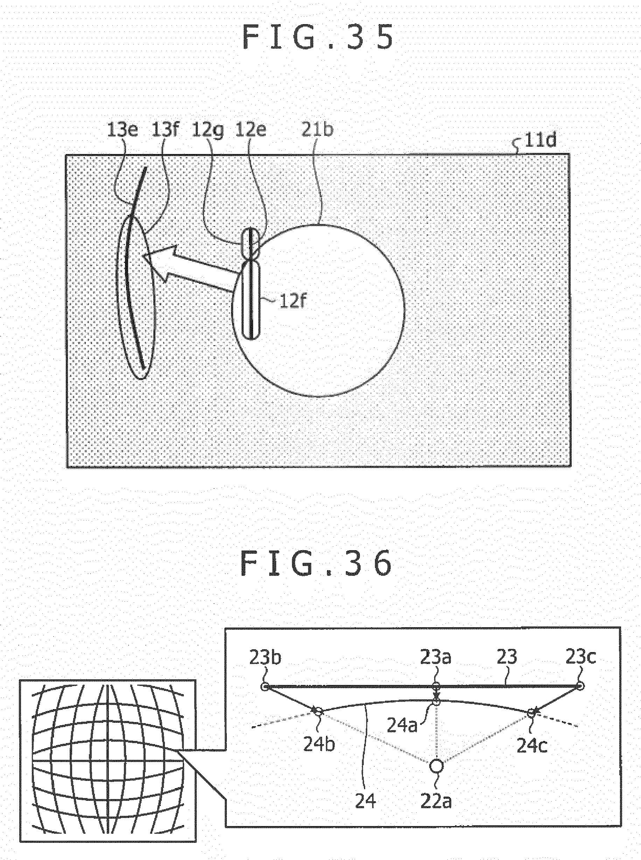

FIG. 35 is a diagram of assistance in explaining processing of an estimating device according to a present second embodiment. The estimating device according to the present second embodiment does not exclude the straight line 12e partially protruding from the non-distorted region 21b from detection targets, but treats the straight line 12e as a straight line having the straight line 12f that partly enables a guarantee. In addition, the estimating device sets the straight line 12e as a starting point, and obtains the curve 13e corresponding to the straight line 12e by performing endpoint tracking processing, inter-endpoint line element search processing, and line element extraction.

The object 21e described with reference to FIG. 34 includes a part 21g included in the non-distorted region 21b and a part 21f not included in the non-distorted region 21b. The part 21f is a part from which a straight line that is difficult to guarantee to be a straight line is detected. The part 21g is a part from which a straight line that can be guaranteed to be a straight line is detected.

Here, as described with reference to FIG. 33, it is difficult to accurately identify the part corresponding to the straight line 12f in the curve 13e. However, the use of "convex lens distortion properties 1 and 2" to be described later makes it possible to identify at least a straight line guaranteeing range 13f of the curve 13e, the straight line guaranteeing range 13f not corresponding to a straight line 12g excluded from a guarantee. The estimating device according to the present second embodiment accumulates the line segment 12f and the curve in the straight line guaranteeing range 13f in the curve 13e as line segments for calibration of the internal parameter.

FIG. 36 is a diagram of assistance in explaining a convex lens distortion property 1. The property 1 is such that each point appears on a central side on an optical axis radius with respect to a non-distorted line. For example, supposing that an optical axis center is 22a, a straight line 23 without distortion appears as a distorted line 24 on the central side on the optical axis radius. In addition, the longer the distance of each point on the straight line 23 from the optical axis center 22a, the larger an amount of movement of each point on the straight line 23 toward the optical axis center 22a.

A point 23a on the straight line 23 moves to a point 24a on the distorted line 24. A point 23b on the straight line 23 moves to a point 24b on the distorted line 24. A point 23c on the straight line 23 moves to a point 24c on the distorted line 24. A distance between the point 23a and the optical axis center 22a is shorter than a distance between the point 23b and the optical axis center 22a. Therefore, a distance from the point 23b to the point 24b is longer than a distance from the point 23a to the point 24a. In addition, a distance between the point 23a and the optical axis center 22a is shorter than a distance between the point 23c and the optical axis center 22a. Therefore, a distance from the point 23c to the point 24c is longer than the distance from the point 23a to the point 24a.

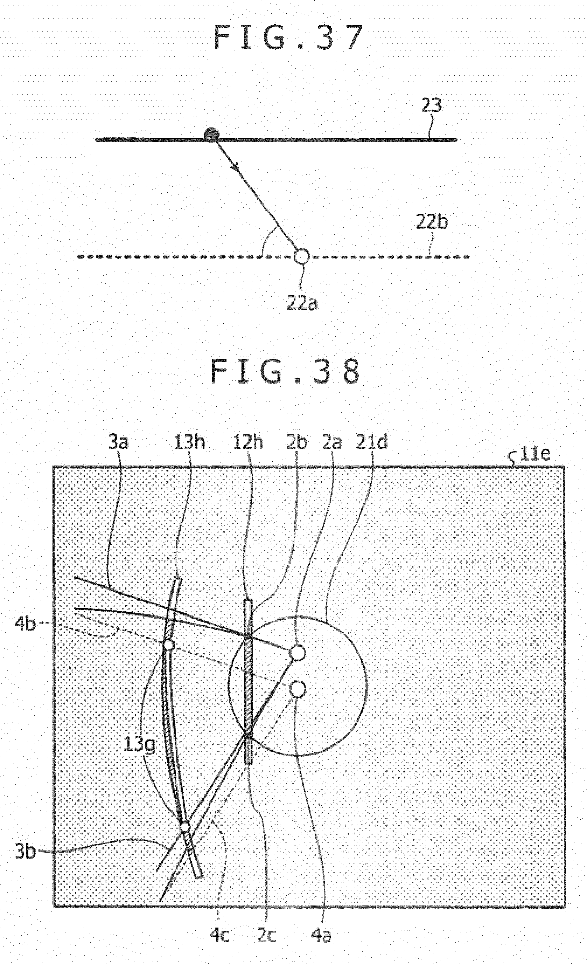

FIG. 37 is a diagram of assistance in explaining a convex lens distortion property 2. The property 2 is such that a distorted straight line does not cross a parallel line on the optical axis. For example, supposing that an optical axis center is 22a, a parallel line that passes through the optical axis center 22a and is parallel with the straight line 23 without distortion is a line segment 22b. As described with regard to the property 1, each point on the straight line 23 without distortion moves to the central side on the optical axis radius (moves in the direction of the optical axis center 22a). Thus, points on the distorted line 24 illustrated in FIG. 36 do not cross the line segment 22b.

The straight line guaranteeing range 13f as described with reference to FIG. 35 may be identified by using the above-described properties 1 and 2. FIG. 38 is a diagram of assistance in explaining processing of identifying a straight line guaranteeing range. The estimating device according to the present second embodiment detects a straight line 12h protruding from a non-distorted region 21d from an image frame 11e. The estimating device sets the straight line 12h as a starting point, and obtains a curve 13h corresponding to the straight line 12h by performing endpoint tracking processing, inter-endpoint line element search processing, and line element extraction.

The estimating device identifies a vanishing point 2a from the image frame 11e. For example, the estimating device detects edges from the image frame 11e, and identifies a point at which the plurality of edges 3a and 3b intersect each other as the vanishing point 2a. The estimating device identifies an optical axis center 4a from the image frame 11e. The optical axis center 4a may be the center of the image frame 11e, or may be a point calculated based on the internal parameter or the like.

The estimating device sets line segments 3a and 3b and line segments 4b and 4c. Points of intersection of the outer circumference of the non-distorted region 21d and a line segment 12h are set as points 2b and 2c, respectively. The line segment 3a is a straight line passing through the vanishing point 2a and the point 2b. The line segment 3b is a straight line passing through the vanishing point 2a and the point 2c. The line segment 4b is a line segment parallel with the line segment 3a, and passes through the optical axis center 4a. The line segment 4c is a line segment parallel with the line segment 3b, and passes through the optical axis center 4a.

From the above-described properties 1 and 2, a part of the line segment 12h, the part being above the point 2b (part protruding from the non-distorted region 21d), does not move beyond the line segment 4b. In addition, from the properties 1 and 2, a part of the line segment 12h, the part being below the point 2c (part protruding from the non-distorted region 21d), moves toward the line segment 4c, and therefore does not move above the line segment 3b. The estimating device thereby identifies a straight line guaranteeing range 13g interposed between the line segment 4b and the line segment 3b. The line segment 4b used in identifying the straight line guaranteeing range 13g is a line segment more to the central side of the optical axis radius than the line segment 3a. The line segment 3b is a line segment more to the central side of the optical axis radius than the line segment 4c.

Thus, by using the convex lens distortion properties 1 and 2, the estimating device according to the present second embodiment may identify the straight line guaranteeing range 13g whose linearity can be guaranteed when the straight line protrudes from the non-distorted region 21d. Therefore, even when the straight line protrudes from the non-distorted region 21d, a set of the straight line included in the non-distorted region 21d (straight line from the point 2b to the point 2c) and the curve in the straight line guaranteeing range 13g may be accumulated as line segments for estimating (calibrating) the internal parameter. Hence, even when there are a small number of image frames including a "straight line object whose entire line segment is completely included" in the non-distorted region, it is possible to solve the problem of taking time to accumulate sufficient line segments to estimate (calibrate) the internal parameter.

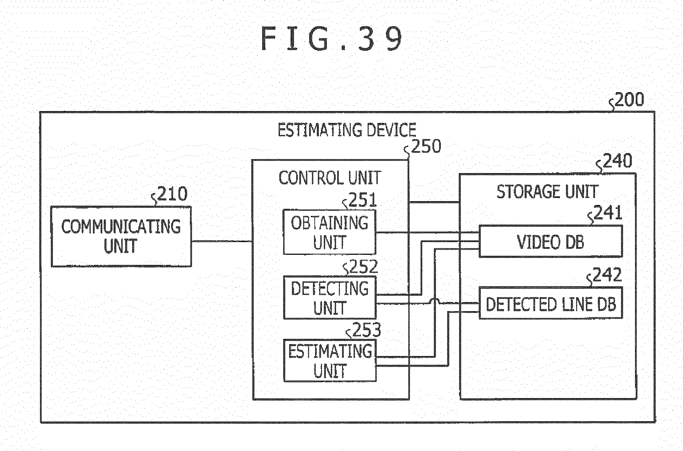

Description will next be made of a configuration of the estimating device according to the present second embodiment. FIG. 39 is a functional block diagram illustrating a configuration of the estimating device according to the present second embodiment. As illustrated in FIG. 39, the estimating device 200 includes a communicating unit 210, an input unit 220 (not illustrated), a display unit 230 (not illustrated), a storage unit 240, and a control unit 250.

As described in the first embodiment, the communicating unit 210 is a communicating device that receives video data from the driving recording unit 10b of the vehicle 10 via the network 50. The communicating unit 210 outputs the video data to the control unit 250.

The storage unit 240 includes a video DB 241 and a detected line DB 242. The storage unit 240 corresponds to a semiconductor memory element such as a RAM, a ROM, or a flash memory and a storage device such as an HDD.

The video DB 241 is a database that stores video data. The video DB 241 includes a data structure similar to the data structure of the video DB 141 described with reference to FIG. 7 and the like in the first embodiment.

The detected line DB 242 is a database that stores information on line segments (straight lines or curves) detected from each image frame. The detected line DB 242 includes a data structure similar to the data structure of the detected line DB 142 described with reference to FIG. 8 and the like in the first embodiment.

The control unit 250 includes an obtaining unit 251, a detecting unit 252, and an estimating unit 253. The control unit 250 may be implemented by a CPU, an MPU, or the like. In addition, the control unit 250 may also be implemented by hard wired logic such as an ASIC or an FPGA.

The obtaining unit 251 is a processing unit that obtains video data photographed by the camera 10a. The obtaining unit 251 stores the obtained video data in the video DB 241.

The detecting unit 252 detects a straight line from the central portion of a first image frame included in the video data stored in the video DB 241. The detecting unit 252 sets a feature of the detected straight line as a starting point, and detects a plurality of curves corresponding to the straight line from a plurality of second image frames subsequent to the first image frame. The detecting unit 252 stores information on the detected straight line and the detected curves in the detected line DB 242. In the following description, the straight line and the curves detected by the detecting unit 252 will be described as "detected lines," as appropriate.

The detecting unit 252 sequentially performs non-distorted region setting processing, straight line detection processing, endpoint tracking processing, inter-endpoint line element search processing, and straight line guaranteeing range identification processing.

The "non-distorted region setting processing" performed by the detecting unit 252 is similar to the non-distorted region setting processing performed by the detecting unit 152 described in the first embodiment.

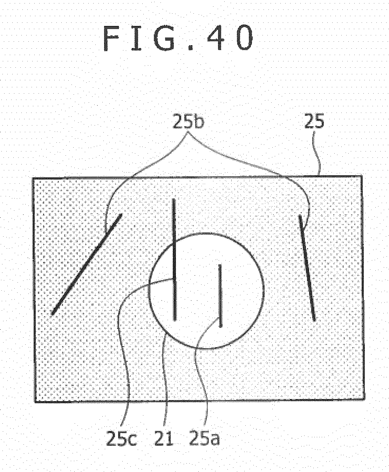

Description will be made of an example of the "straight line detection processing" performed by the detecting unit 252. The detecting unit 252 sets a non-distorted region in an image frame, and detects a straight line present in the non-distorted region. FIG. 40 is a diagram of assistance in explaining straight line detection processing according to the present second embodiment. As an example, the detecting unit 252 obtains an edge image 25 by performing edge detection on the image frame. The detecting unit 252 uses a publicly known edge detecting technology typified by a Canny algorithm. A circle 21 represents the non-distorted region obtained by the non-distorted region setting processing.

The detecting unit 252 detects straight lines 25a, 25b, and 25c from the edge image 25 by using a Hough transform algorithm. The detecting unit 252 identifies the straight line 25a included in the non-distorted region (circle 21) among the straight lines 25a and 25b. The straight lines 25b are line segments detected from a region in which distortion may occur, and are therefore not used in subsequent processing. Incidentally, the detecting unit 252 identifies a straight line 25c partially included in the non-distorted region.

Description will be made of an example of the "endpoint tracking processing" performed by the detecting unit 252. Detected lines in a present image frame are image-tracked by using a previous image frame and detected lines (for example, the straight lines 25a and 25c) in the previous image frame. The endpoint tracking processing performed by the detecting unit 252 is similar to the endpoint tracking processing performed by the detecting unit 152 described in the first embodiment.

Description will be made of an example of the "inter-endpoint line element search processing" performed by the detecting unit 252. The inter-endpoint line element search processing performed by the detecting unit 252 is similar to the inter-endpoint line element search processing performed by the detecting unit 152 described in the first embodiment. As described in the first embodiment, a curve corresponding to the straight line identified by the straight line detection processing may be obtained by performing such inter-endpoint line element search processing.

When the straight line identified by the straight line detection processing does not protrude from the non-distorted region, the detecting unit 252 stores, in the detected line DB 142, information on the straight line and the curve corresponding to the straight line.

The detecting unit 252 performs "straight line guaranteeing range identification processing" to provide for a case where the straight line identified by the straight line detection processing protrudes from the non-distorted region. The straight line guaranteeing range identification processing performed by the detecting unit 252 corresponds to the processing described with reference to FIG. 38.

For example, the detecting unit 252 identifies a vanishing point 2a from an image frame 11e. The detecting unit 252 may identify the vanishing point 2a in any manner. For example, the detecting unit 252 extracts each point such as a feature point from the image frame 11e, and calculates the optical flow of each point from consecutive image frames including the image frame 11e. The detecting unit 252 generates the straight line equation of each optical flow, and identifies the straight line intersection point of each optical flow as the vanishing point 2a.

In a case where there is a plurality of vanishing points, the detecting unit 252 may evaluate each of the vanishing points, and select and use an optimum vanishing point. For example, the evaluation value of a vanishing point identified stably from each image frame is increased. On the other hand, the evaluation value of a vanishing point not stably identified from each image frame is reduced.

The detecting unit 252 identifies an optical axis center 4a from the image frame 11e. The optical axis center 4a may be the center of the image frame 11e, or may be a point calculated based on the internal parameter or the like.

The detecting unit 252 sets line segments 3a and 3b and line segments 4b and 4c. Points of intersection of the outer circumference of the non-distorted region 21d and a line segment 12h are set as points 2b and 2c, respectively. As an example, suppose that the line segment 12h is a line segment corresponding to the line segment 25c in FIG. 40. The line segment 3a is a straight line passing through the vanishing point 2a and the point 2b. The line segment 3b is a straight line passing through the vanishing point 2a and the point 2c. The line segment 4b is a line segment parallel with the line segment 3a, and passes through the optical axis center 4a. The line segment 4c is a line segment parallel with the line segment 3b, and passes through the optical axis center 4a.

The detecting unit 252 identifies a straight line guaranteeing range 13g interposed between the line segment 4b and the line segment 3b based on the convex lens distortion properties 1 and 2. The line segment 4b used in identifying the straight line guaranteeing range 13g is a line segment more to the central side of the optical axis radius than the line segment 3a. The line segment 3b is a line segment more to the central side of the optical axis radius than the line segment 4c. The detecting unit 252 stores, in the detected line DB 142, information on the straight line from the point 2b to the point 2c in the line segment 12h and the curve included in the straight line guaranteeing range 13g in the curve 13h.

The estimating unit 253 is a processing unit that estimates the internal parameter based on the information on each detected line, the information being stored in the detected line DB 242. The processing of the estimating unit 253 corresponds to the processing of the estimating unit 153 described in the first embodiment.

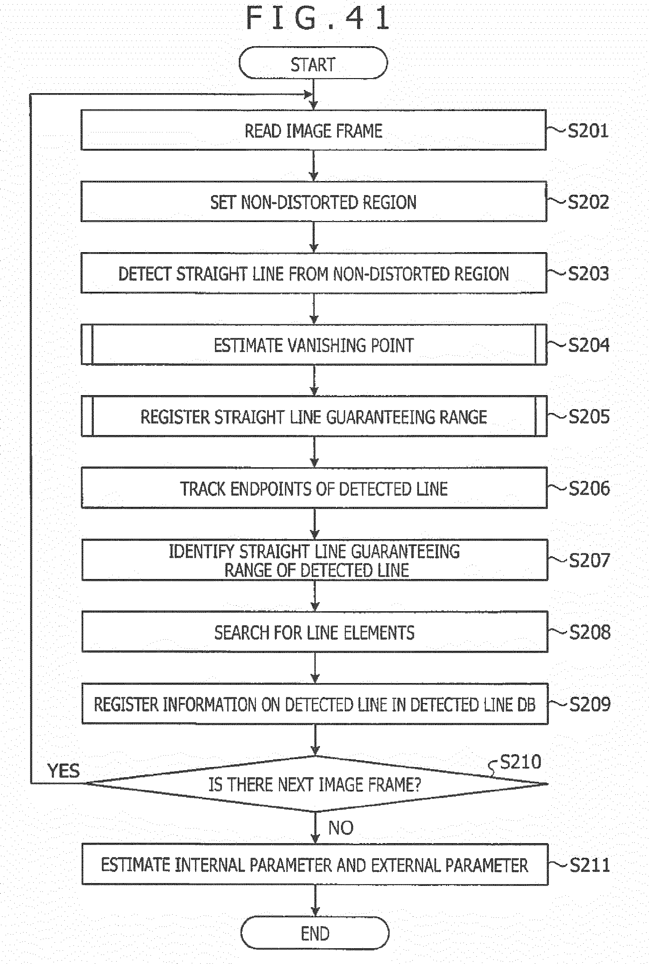

Description will next be made of an example of a processing procedure of the estimating device according to the present second embodiment. FIG. 41 is a flowchart illustrating an example of a processing procedure of the estimating device according to the present second embodiment. As illustrated in FIG. 41, the detecting unit 252 of the estimating device 200 reads an image frame from the video DB 241 (step S201). The detecting unit 252 sets a non-distorted region (step S202). The detecting unit 252 detects a straight line from the non-distorted region (step S203).

The detecting unit 252 performs vanishing point estimation (step 5204). The detecting unit 252 registers a straight line guaranteeing range (step S205). The detecting unit 252 tracks endpoints of the detected line (step S206). The detecting unit 252 identifies the straight line guaranteeing range of the detected line (step S207). The detecting unit 252 searches for line elements (step S208). The detecting unit 252 registers information on the detected line in the detected line DB 242 (step S209).

When there is a next image frame (step S210, Yes), the detecting unit 252 proceeds to step S201. When there is no next image frame (step S210, No), on the other hand, the detecting unit 252 proceeds to step S211. The estimating unit 253 of the estimating device 200 estimates an internal parameter and an external parameter (step S211).

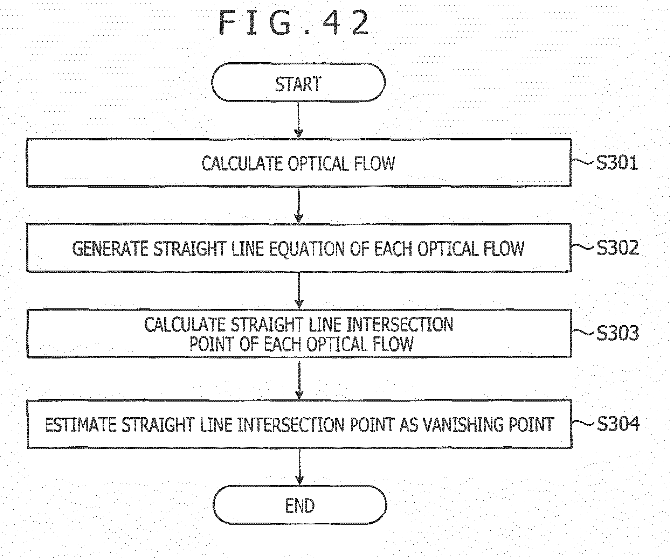

Description will be made of an example of the vanishing point estimation processing illustrated in step S204 in FIG. 41. FIG. 42 is a flowchart illustrating a processing procedure of vanishing point estimation. As illustrated in FIG. 42, the detecting unit 252 of the estimating device 200 calculates the time difference optical flow of each point on the image frame (step S301). The detecting unit 252 generates the straight line equation of each optical flow (step S302).

The detecting unit 252 calculates the straight line intersection point of each optical flow (step S303). The detecting unit 252 estimates the straight line intersection point as a vanishing point (step S304).

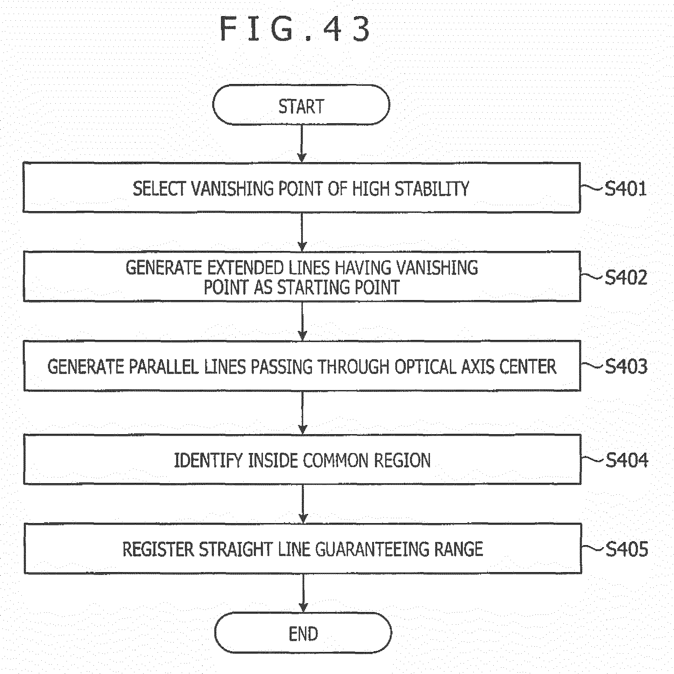

Description will be made of an example of the processing of registering a straight line guaranteeing range, the processing being illustrated in step 205 in FIG. 41. FIG. 43 is a flowchart illustrating a processing procedure of registering a straight line guaranteeing range. As illustrated in FIG. 43, the detecting unit 252 of the estimating device 200 selects a vanishing point of high stability (step S401). The detecting unit 252 generates extended lines having the vanishing point as a starting point (step S402). For example, the extended lines illustrated in step S402 correspond to the line segments 3a and 3b illustrated in FIG. 38.

The detecting unit 252 generates parallel lines passing through the optical axis center (step S403). For example, the parallel lines illustrated in step S403 correspond to the line segments 4b and 4c illustrated in FIG. 38. The detecting unit 252 identifies an inside common region (step S404), and registers the inside common region as a straight line guaranteeing range (step S405). For example, the inside common region represents a region between the line segments 3b and 4b illustrated in FIG. 38.

Description will next be made of effects of the estimating device 200 according to the present second embodiment. By using the convex lens distortion properties 1 and 2, the estimating device 200 according to the present second embodiment may identify the straight line guaranteeing range 13g whose linearity can be guaranteed when the straight line protrudes from the non-distorted region 21d. Therefore, as illustrated in FIG. 38, even when the straight line protrudes from the non-distorted region 21d, a set of the straight line included in the non-distorted region 21d (straight line from the point 2b to the point 2c) and the curve in the straight line guaranteeing range 13g may be accumulated as line segments for estimating (calibrating) the internal parameter. Hence, even when there are a small number of image frames including a "straight line object whose entire line segment is completely included" in the non-distorted region, it is possible to solve the problem of taking time to accumulate sufficient line segments to estimate (calibrate) the internal parameter.

Incidentally, as described with reference to FIG. 38, the detecting unit 252 of the above-described estimating device 200 identifies the straight line guaranteeing range 13g by using the set of the line segments 3a and 3b (straight lines representing ideal spread of an approaching stationary object) and the line segments 4b and 4c (lines parallel with the line segments 3a and 3b). However, there is no limitation to this. The detecting unit 252 may identify maximum distortion lines in place of the line segments 4b and 4c representing the parallel lines, and identify the straight line guaranteeing range. The maximum distortion lines are straight lines indicating the spread of an approaching stationary object, the straight lines assuming the case of a maximum distortion amount. The maximum distortion amount is set in advance. The detecting unit 252 may calculate the maximum distortion lines based on such a distortion amount.

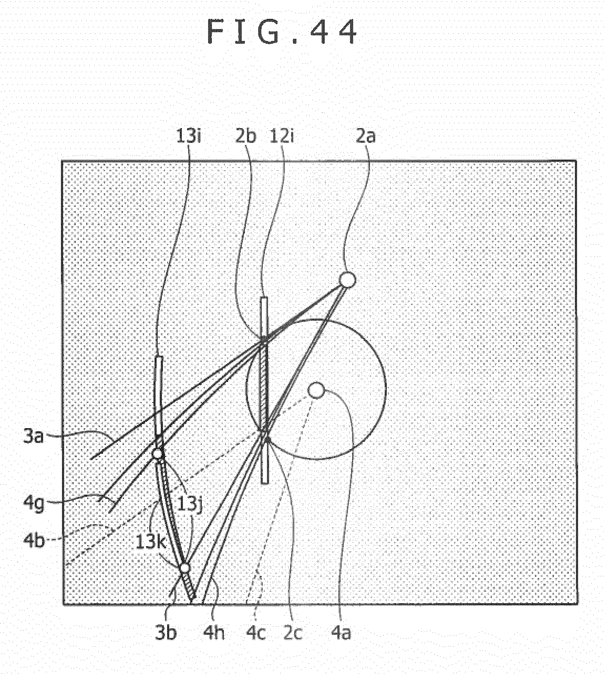

FIG. 44 is a diagram of assistance in explaining other processing of identifying a straight line guaranteeing range. In FIG. 44, a line segment 3a is a straight line passing through a vanishing point 2a and a point 2b. A line segment 3b is a straight line passing through the vanishing point 2a and a point 2c. The line segments 3a and 3b are straight lines indicating an ideal spread of an approaching stationary object, the straight lines assuming the case of a minimum distortion amount. Line segments 4g and 4h are maximum distortion lines.

The line segment 4g is a line segment assumed in a case where the point 2b on a line segment 12i is distorted to a maximum degree. Therefore, a part above the point 2b on the line segment 12i does not move beyond the line segment 4g. In addition, from the properties 1 and 2, a part below the point 2c on the line segment 12i moves toward the line segment 4c, and therefore does not move above the line segment 3b. The detecting unit 252 thereby identifies a straight line guaranteeing range 13j interposed between the line segment 4g and the line segment 3b.

When parallel lines (line segments 4b and 4c) as described with reference to FIG. 38 are used in place of the maximum distortion lines, the identified straight line guaranteeing range is a range 13k. Hence, the straight line guaranteeing range may be set wider by using the maximum distortion lines.

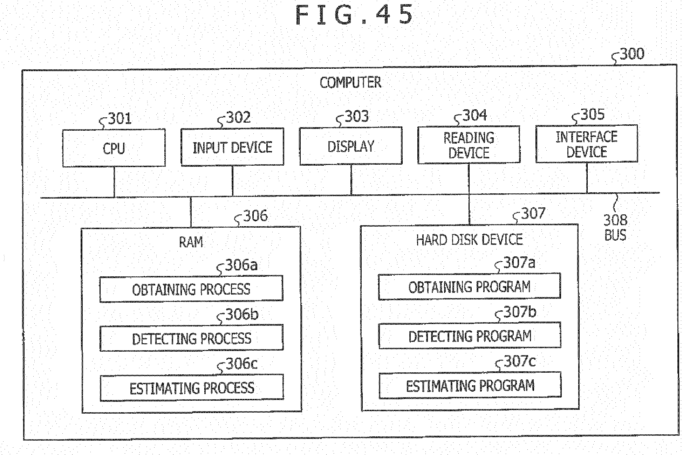

Description will next be made of an example of a hardware configuration of a computer that implements functions similar to those of the estimating devices 100 and 200 illustrated in the foregoing embodiments. FIG. 45 is a diagram illustrating an example of a hardware configuration of a computer that implements functions similar to those of the estimating devices.

As illustrated in FIG. 45, a computer 300 includes: a CPU 301 that performs various kinds of arithmetic processing; an input device 302 that receives input of data from a user; and a display 303. The computer 300 also includes: a reading device 304 that reads a program or the like from a storage medium; and an interface device 305 that sends and receives data to and from a recording apparatus or the like via a wired or wireless network. The computer 300 further includes: a RAM 306 that temporarily stores various kinds of information; and a hard disk device 307. The devices 301 to 307 are coupled to a bus 308.

The hard disk device 307 includes an obtaining program 307a, a detecting program 307b, and an estimating program 307c. The CPU 301 reads the obtaining program 307a, the detecting program 307b, and the estimating program 307c, and expands the obtaining program 307a, the detecting program 307b, and the estimating program 307c in the RAM 306.

The obtaining program 307a functions as an obtaining process 306a. The detecting program 307b functions as a detecting process 306b. The estimating program 307c functions as an estimating process 306c.

The processing of the obtaining process 306a corresponds to the processing of the obtaining units 151 and 251. The processing of the detecting process 306b corresponds to the processing of the detecting units 152 and 252. The processing of the estimating process 306c corresponds to the processing of the estimating units 153 and 253.

Incidentally, the programs 307a to 307c do not necessarily need to be stored in the hard disk device 307 from the beginning. For example, each program is stored in advance on a "portable physical medium" such as a flexible disk (FD), a compact disc-read only memory (CD-ROM), a digital versatile disc (DVD), a magneto-optical disk, or an integrated circuit (IC) card inserted into the computer 300. The computer 300 may read and execute the programs 307a to 307c.

**Claims**

1. A computer-readable storage medium storing a camera parameter estimating program for causing a computer perform a process comprising:

   obtaining a plurality of image frames in time series, the image frames being photographed by a camera installed in a mobile body;
   detecting at least one straight line from a central portion of a first image frame group including one or more first image frames among the plurality of image frames;
   detecting a plurality of curves corresponding to the straight line from a second image frame group including one or more second image frames at a later time than an image frame from which the straight line is detected based on a feature quantity of the detected straight line; and
   estimating a parameter of the camera based on the plurality of curves.

2. The storage medium according to claim 1, the process further comprising:

   detecting the plurality of curves from a plurality of the second image frames when the one straight line is detected from one first image frame; and
   detecting the plurality of curves from at least one second image frame when a plurality of straight lines are detected from one first image frame.

3. The storage medium according to claim 1 or 2, the process further comprising:

   recording information on the plurality of curves in a storage device, and estimating the parameter of the camera based on the information on the plurality of curves.

4. The storage medium according to any of claims 1-3, the process further comprising:

   determining a region corresponding to the central portion based on resolution of the image frames and an angle of view of the camera,
   wherein the detecting the straight line detects the straight line from the region.

5. The storage medium according to any of claims 1-4, wherein
   the detecting the curves detects an edge from a local region on the second image frame, the local region corresponding to a local region centered at an endpoint of the straight line detected from the first image frame, and detects the curve based on the detected edge.

6. The storage medium according to claim 5, wherein

for a plurality of second image frames, the detecting the curves detects an edge from a local region in one second image frame at a later time in the time series, the local region corresponding to a local region centered at an endpoint of a curve in another second image frame at an earlier time in the time series, and detects another curve based on the detected edge.

7. The storage medium according to any of claims 1-6, wherein
the detecting the curves divides a region of the second image frame into a first region and a second region by a straight line passing through both endpoints of a curve, and detects the curve from one of the first region and the second region.

8. The storage medium according to any of claims 1-7, wherein
the detecting the curves repeats connecting edge pixels included in a local region of the second image frame, detects a curve by making the edge pixels reach a terminal end of the curve, and when selecting a second edge pixel to be next connected to a first edge pixel from a plurality of edge pixels, selects an edge pixel closer to the terminal end than the first edge pixel as the second edge pixel.

9. The storage medium according to any of claims 6-8, wherein
the detecting the curves connects edge pixels included in a local region of the second image frame such that coordinate values of pixels constituting the curve have one extreme value.

10. The storage medium according to claim 4, the process further comprising:

identifying a vanishing point and an optical axis center on the image frame, and identifying a range of a curve corresponding to the straight line included in the region corresponding to the central portion based on positions of the vanishing point and the optical axis center.

11. The storage medium according to claim 10, wherein
a first straight line and a second straight line are identified, the first straight line passing through a point of intersection of an outer circumference of the region corresponding to the central portion and the straight line and passing through the vanishing point, the second straight line passing through the optical axis center and being parallel with the first straight line, and the range of the curve is identified based on either of the first or second straight line whichever closer to the central portion.

12. The storage medium according to claim 11, wherein
a distortion line indicating a spread of the vanishing point is set based on a distortion amount set in advance, and the range of the curve is identified based on the first straight line and the distortion line.

13. A camera parameter estimating method performed by a computer, the method comprising:

obtaining a plurality of image frames in time series, the image frames being photographed by a camera installed in a mobile body;
detecting at least one straight line from a central portion of a first image frame group including one or more first image frames among the plurality of image frames;
detecting a plurality of curves corresponding to the straight line from a second image frame group including one or more second image frames at a later time than an image frame from which the straight line is detected based on a feature quantity of the detected straight line; and
estimating a parameter of the camera based on the plurality of curves.

14. A camera parameter estimating system comprising:

an obtaining unit configured to obtain a plurality of image frames in time series, the image frames being photographed by a camera installed in a mobile body;
a detecting unit configured to detect at least one straight line from a central portion of a first image frame group including one or more first image frames among the plurality of image frames, and to detect a plurality of curves corresponding to the straight line from a second image frame group including one or more second image frames at a later time than an image frame from which the straight line is detected based on a feature quantity of the detected straight line; and
an estimating unit configured to estimate a parameter of the camera based on the plurality of curves.

# FIG.1

# FIG.2

# FIG.3

# FIG.4

12c  11c      13c

# FIG.5

13d                    14d

# FIG.6

ESTIMATING DEVICE  ⌐100

CONTROL UNIT  ⌐150

COMMUNICATING UNIT  ⌐110

OBTAINING UNIT  ⌐151

DETECTING UNIT  ⌐152

ESTIMATING UNIT  ⌐153

STORAGE UNIT  ⌐140

VIDEO DB  ⌐141

DETECTED LINE DB  ⌐142

# FIG.7

⌐141

| FRAME NUMBER | IMAGE FRAME |
|---|---|
| 1 | IMAGE FRAME HAVING FRAME NUMBER "1" |
| 2 | IMAGE FRAME HAVING FRAME NUMBER "2" |
| 3 | IMAGE FRAME HAVING FRAME NUMBER "3" |
| 4 | IMAGE FRAME HAVING FRAME NUMBER "4" |
| ... | ... |

# FIG.8

142

| LINE IDENTIFICATION NUMBER | COORDINATES |
|---|---|
| Id0 | $(x_{00}, y_{00})$, $(x_{01}, y_{01})$, $(x_{02}, y_{02})$, $\cdots$ |
| Id1 | $(x_{10}, y_{10})$, $(x_{11}, y_{11})$, $(x_{12}, y_{12})$, $\cdots$ |
| Id2 | $(x_{20}, y_{20})$, $(x_{21}, y_{21})$, $(x_{22}, y_{22})$, $\cdots$ |
| Id3 | $(x_{30}, y_{30})$, $(x_{31}, y_{31})$, $(x_{32}, y_{32})$, $\cdots$ |
| ... | ... |

# FIG.9

# FIG.10

# ＦＩＧ．１１

```
            ┌──────────────┐
            │    START     │
            └──────┬───────┘
                   │                          ⌐S10
        ┌──────────▼──────────────────────────┐
        │      VARIABLE x = 1, 2, ..., max     │
        └──────────┬──────────────────────────┘
                   │                          ⌐S11
        ┌──────────▼──────────────────────────┐
        │ CALCULATE DISTORTION CORRECTION      │
        │ COORDINATES P0' (x0', y0') OF        │
        │ COORDINATES P0 (x, 0)                │
        └──────────┬──────────────────────────┘
                   │                          ⌐S12
        ┌──────────▼──────────────────────────┐
        │      VARIABLE l = 1, 2, ..., max     │
        └──────────┬──────────────────────────┘
                   │                          ⌐S13
        ┌──────────▼──────────────────────────┐
        │ CALCULATE DISTORTION CORRECTION      │
        │ COORDINATES Pl' (xl', yl') OF        │
        │ COORDINATES Pl (x, l)                │
        └──────────┬──────────────────────────┘
                   │                          ⌐S14
        ┌──────────▼──────────────────────────┐
        │ CALCULATE DIFFERENCE d' IN           │
        │ RADIAL AXIS DIRECTION                │
        └──────────┬──────────────────────────┘
                   │                          ⌐S15
    YES   ◇────────▼──────────────────────────◇
    ┌─────  DIFFERENCE d' > THRESHOLD VALUE dth?
    │     ◇─────────────────────────────────◇
    │              │ NO                       ⌐S16
    │   ┌──────────▼──────────────────────────┐
    │   │                                     │
    │   └──────────┬──────────────────────────┘
    └──────────────┤                          ⌐S17
        ┌──────────▼──────────────────────────┐
        │   RECORD MAXIMUM TANGENT LENGTH l    │
        └──────────┬──────────────────────────┘
                   │                          ⌐S18
        ┌──────────▼──────────────────────────┐
        │                                     │
        └──────────┬──────────────────────────┘
                   │                          ⌐S19
        ┌──────────▼──────────────────────────┐
        │ IDENTIFY SHORTEST DISTANCE rmin, AND │
        │ IDENTIFY NON-DISTORTED REGION        │
        └──────────┬──────────────────────────┘
                   │
            ┌──────▼───────┐
            │     END      │
            └──────────────┘
```

The flowchart of FIG. 11:

START

**S10** — VARIABLE $x$ = 1, 2, ..., max

**S11** — CALCULATE DISTORTION CORRECTION COORDINATES $P_0'$ ($x_0'$, $y_0'$) OF COORDINATES $P_0$ ($x$, 0)

**S12** — VARIABLE $l$ = 1, 2, ..., max

**S13** — CALCULATE DISTORTION CORRECTION COORDINATES $P_l'$ ($x_l'$, $y_l'$) OF COORDINATES $P_l$ ($x$, $l$)

**S14** — CALCULATE DIFFERENCE $d'$ IN RADIAL AXIS DIRECTION

**S15** — DIFFERENCE $d'$ > THRESHOLD VALUE $d_{th}$? — YES / NO

**S16**

**S17** — RECORD MAXIMUM TANGENT LENGTH $l$

**S18**

**S19** — IDENTIFY SHORTEST DISTANCE $r_{min}$, AND IDENTIFY NON-DISTORTED REGION

END

FIG.12

25b          25

21  25a

FIG.13

26a 27a 28a

26  26b 27b 28b

# F I G . 1 4

# FIG.15

35 35a

35b 35c

# FIG.16

39

40a

40

41a 41b

40b

# FIG.17

# FIG.18

```
          ┌─────────────┐
          │    START     │
          └─────────────┘
                 │
                 ▼            S20
          ┌─────────────────────┐
          │   INITIAL SETTING    │
          └─────────────────────┘
                 │
                 ▼
          ┌─────────────────────┐
          │  LINE ELEMENT SEARCH │ ～ S21
          └─────────────────────┘
                 │
                 ▼           S22
              ╱╲
            ╱    ╲   IS LINE ELEMENT      NO
           ╱  DETERMINED? ╲──────────────────┐
            ╲            ╱                    │
              ╲        ╱                      │
                ╲    ╱                        ▼           S25
                 │ YES                      ╱╲
                 ▼           S23          ╱    ╲  CAN SEARCH STARTING   YES
          ┌─────────────────────┐       ╱  POINT BE RESET? ╲──────────
          │  OUTPUT LINE ELEMENT │       ╲                ╱
          └─────────────────────┘         ╲            ╱
                 │                           ╲        ╱
                 ▼           S24               │ NO
    NO        ╱╲                               │
    ┌───────╱    ╲  IS ENDPOINT REACHED?       │
            ╲    ╱                             │
              ╲╱                               ▼
                │ YES                   ┌──────────────────┐
                ▼                       │  END 2 (ERROR)    │
          ┌─────────────┐               └──────────────────┘
          │    END 1     │
          └─────────────┘
```

# FIG.19

START

S31
SET SEARCH STARTING POINT

S32
SET MINIMUM SEARCH RANGE

S33
LINE ELEMENT CANDIDATE SEARCH

S34
IS THERE CANDIDATE POINT?
NO
YES

S35
EVALUATE CANDIDATE POINT

S36
IS LINE ELEMENT DETERMINED?
YES
NO

S37
CAN SEARCH RANGE BE ENLARGED?
NO
YES

S38
ENLARGE SEARCH RANGE

END 2 (ERROR)

END 1

FIG.20

47a — 48

47b

FIG.21

50a    50b    50c

# FIG.22

```
            ┌─────────────┐
            │    START    │
            └─────────────┘
                   │
                   ▼
        ╱───────────────────╲  S41
  NO   ╱  IS THERE LINE ELEMENT ╲
◄──────  CANDIDATE POINT NOT
        ╲   YET EVALUATED?    ╱
   ┌───┐  ╲───────────────────╱
   │END│       │ YES
   │ 1 │       ▼                      S42
   └───┘  ┌──────────────────────────────┐
          │ OBTAIN COORDINATES OF LINE   │
          │ ELEMENT CANDIDATE POINT      │
          │ NOT YET EVALUATED            │
          └──────────────────────────────┘
                   │
                   ▼
        ╱───────────────────╲  S43
 YES   ╱   COORDINATES OF      ╲
◄──────  LINE ELEMENT CANDIDATE POINT
        ╲  = TERMINAL END?    ╱
   ┌───┐  ╲───────────────────╱
   │END│       │ NO
   │ 2 │       ▼                      S44
   └───┘  ╱───────────────────╲
         ╱  SAME STRAIGHT LINE  ╲  NO
          REGION AS PREVIOUS      ────►
         ╲   LINE ELEMENT?     ╱
          ╲───────────────────╱
               │ YES
               ▼                      S45
        ╱───────────────────╲
       ╱ IS LINE ELEMENT CANDIDATE╲ NO
        POINT CLOSER TO TERMINAL END ────►
       ╲ THAN PREVIOUS LINE ELEMENT?╱
        ╲───────────────────╱
               │ YES
               ▼                      S46
        ╱───────────────────╲
       ╱ DOES DISTANCE BETWEEN ╲  NO
        LINE ELEMENT CANDIDATE    ────►
        POINT AND STRAIGHT LINE
       ╲ SATISFY CHANGE CONDITION?╱
        ╲───────────────────╱
               │ YES
               ▼                      S47
        ╱───────────────────╲
       ╱ IS CHANGE IN DISTANCE SMALLER╲ NO
        THAN THAT OF REGISTERED         ────►
       ╲   LINE ELEMENT?      ╱
        ╲───────────────────╱
               │ YES
               ▼                      S48
   ┌──────────────────────────────┐
   │ UPDATE LINE ELEMENT COORDINATES│
   └──────────────────────────────┘
```

EP 3 467 775 A1

# FIG.23

# FIG.24

# FIG.25

```
        START
          |
          v
        S61
   IS THERE REGISTERED        NO
     LINE ELEMENT? ---------------------+
          |                             |
         YES                           |
          |  S62                        |
   DELETE NEWEST REGISTERED LINE ELEMENT |
          |                             |
          v  S63                        |
 DELETE EDGE PIXEL AS TARGET OF DELETION |
          |                             |
          v  S64                        |
   RESET SEARCH STARTING POINT          |
          |                             |
          v                             v
        END 1                         END 2
```

FIG.26

# FIG.27

75a

75b

FIG.28

# FIG.29

80a

80b

# F I G . 3 0

START

S101

READ IMAGE FRAME

S102

SET NON-DISTORTED REGION

S103

DETECT STRAIGHT LINE FROM NON-DISTORTED REGION

S104

TRACK ENDPOINTS OF DETECTED LINE

S105

SEARCH FOR LINE ELEMENTS

S106

REGISTER INFORMATION ON DETECTED LINE IN DETECTED LINE DB

S107

YES

IS THERE NEXT IMAGE FRAME?

NO

S108

ESTIMATE INTERNAL PARAMETER AND EXTERNAL PARAMETER

END

# FIG.31

# FIG.32

FIG.33

# FIG.34

21f

21e

21g

21b

FIG.35

FIG.36

# FIG.37

# FIG.38

# FIG.39

FIG.40

# FIG.41

START

READ IMAGE FRAME ~S201

SET NON-DISTORTED REGION ~S202

DETECT STRAIGHT LINE FROM NON-DISTORTED REGION ~S203

ESTIMATE VANISHING POINT ~S204

REGISTER STRAIGHT LINE GUARANTEEING RANGE ~S205

TRACK ENDPOINTS OF DETECTED LINE ~S206

IDENTIFY STRAIGHT LINE GUARANTEEING
RANGE OF DETECTED LINE ~S207

SEARCH FOR LINE ELEMENTS ~S208

REGISTER INFORMATION ON DETECTED LINE IN DETECTED LINE DB ~S209

IS THERE NEXT IMAGE FRAME? S210

YES

NO

ESTIMATE INTERNAL PARAMETER AND EXTERNAL PARAMETER ~S211

END

# FIG.42

```
         ┌──────────────┐
         │    START     │
         └──────┬───────┘
                │
                ▼
┌─────────────────────────────────────────────┐
│           CALCULATE OPTICAL FLOW            │──S301
└──────────────────┬──────────────────────────┘
                   │
                   ▼
┌─────────────────────────────────────────────┐
│ GENERATE STRAIGHT LINE EQUATION OF EACH OPTICAL FLOW │──S302
└──────────────────┬──────────────────────────┘
                   │
                   ▼
┌─────────────────────────────────────────────┐
│       CALCULATE STRAIGHT LINE INTERSECTION   │──S303
│          POINT OF EACH OPTICAL FLOW          │
└──────────────────┬──────────────────────────┘
                   │
                   ▼
┌─────────────────────────────────────────────┐
│ ESTIMATE STRAIGHT LINE INTERSECTION POINT AS VANISHING POINT │──S304
└──────────────────┬──────────────────────────┘
                   │
                   ▼
         ┌──────────────┐
         │     END      │
         └──────────────┘
```

# FIG.43

```
        ┌─────────────┐
        │    START    │
        └──────┬──────┘
               │
               ▼
┌─────────────────────────────────────────────┐
│  SELECT VANISHING POINT OF HIGH STABILITY    │─S401
└──────────────────────┬──────────────────────┘
                       │
                       ▼
┌─────────────────────────────────────────────┐
│  GENERATE EXTENDED LINES HAVING VANISHING    │─S402
│        POINT AS STARTING POINT               │
└──────────────────────┬──────────────────────┘
                       │
                       ▼
┌─────────────────────────────────────────────┐
│ GENERATE PARALLEL LINES PASSING THROUGH OPTICAL AXIS CENTER │─S403
└──────────────────────┬──────────────────────┘
                       │
                       ▼
┌─────────────────────────────────────────────┐
│         IDENTIFY INSIDE COMMON REGION        │─S404
└──────────────────────┬──────────────────────┘
                       │
                       ▼
┌─────────────────────────────────────────────┐
│   REGISTER STRAIGHT LINE GUARANTEEING RANGE  │─S405
└──────────────────────┬──────────────────────┘
                       │
                       ▼
        ┌─────────────┐
        │     END     │
        └─────────────┘
```

# FIG.44

# FIG.45

COMPUTER 300

| CPU 301 | INPUT DEVICE 302 | DISPLAY 303 | READING DEVICE 304 | INTERFACE DEVICE 305 |

308 BUS

RAM 306

OBTAINING PROCESS 306a

DETECTING PROCESS 306b

ESTIMATING PROCESS 306c

HARD DISK DEVICE 307

OBTAINING PROGRAM 307a

DETECTING PROGRAM 307b

ESTIMATING PROGRAM 307c

**EUROPEAN SEARCH REPORT**

Application Number

EP 18 19 6810

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JIN WEI ET AL: "Fisheye Video Correction", IEEE TRANSACTIONS ON VISUALIZATION AND COMPUTER GRAPHICS, IEEE SERVICE CENTER, LOS ALAMITOS, CA, US, vol. 18, no. 10, 1 October 2012 (2012-10-01), pages 1771-1783, XP011490471, ISSN: 1077-2626, DOI: 10.1109/TVCG.2011.130 | 1-7,13, 14 | INV. G06T7/80 |
| A | * abstract; figure 2 * <br> * section 3, paragraph 1 * <br> * section 4.1, paragraphs 1-5; figure 4 * <br> * section 5, paragraph 2 * <br> * section 5.1, paragraph 3 * <br> * section 6.2, lines 9-13;; figures 3a-3b * <br> * section 7, last sentence * | 8-12 | |
| Y | US 2015/304651 A1 (BABA KOZO [JP] ET AL) 22 October 2015 (2015-10-22) | 1-7,13, 14 | TECHNICAL FIELDS SEARCHED (IPC) |
| A | * paragraphs [0034], [0036]; figure 5 * | 8-12 | G06T |

The present search report has been drawn up for all claims

| Place of search | Date of completion of the search | Examiner |
|---|---|---|
| Munich | 21 February 2019 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 6810

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2019

| Patent document cited in search report | Publication date | Patent family member(s) | Publication date |
|---|---|---|---|
| US 2015304651 A1 | 22-10-2015 | JP 6299371 B2<br>JP 2015207868 A<br>US 2015304651 A1 | 28-03-2018<br>19-11-2015<br>22-10-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011185753 A
- JP 2013115540 A
- JP 2016111585 A